# EUROPÄISCHE PATENTSCHRIFT

(11) **EP 3 998 463 B1**
(45) Veröffentlichungstag und Bekanntmachung des Hinweises auf die Patenterteilung: **01.01.2025**
(21) Anmeldenummer: 22150346.9
(22) Anmeldetag: 16.11.2016
(51) Int. Cl.: G01F 1/325, G01L 9/00

(54) **WANDLERVORRICHTUNG SOWIE MITTELS EINER SOLCHEN WANDLERVORRICHTUNG GEBILDETES MESSSYSTEM**
TRANSDUCER DEVICE AND MEASURING SYSTEM FORMED BY SUCH A TRANSDUCER DEVICE
DISPOSITIF TRANSFORMATEUR, AINSI QUE SYSTÈME DE MESURE FORMÉ AU MOYEN D'UN TEL DISPOSITIF TRANSFORMATEUR

(30) Priorität: 22.12.2015 DE 102015122553
(43) Veröffentlichungstag der Anmeldung: 18.05.2022
(62) Teilanmeldung aus: 16797541.6
(73) Patentinhaber: Endress+Hauser Flowtec AG, 4153 Reinach (CH)
(72) Erfinder: Höcker, Rainer, 79761 Waldshut (DE)
(74) Vertreter: Hahn, Christian

(56) Entgegenhaltungen:
- WO-A2-2005/046426
- DE-A1- 102013 010 015
- DE-A1- 19 856 951
- US-A- 4 361 050
- US-A1- 2011 247 430
- US-A1- 2015 268 082

## Beschreibung

Die Erfindung betrifft eine Wandlervorrichtung, insb. zum Erfassen von Druckschwankungen in einer in einem strömenden Fluid ausgebildeten Kármánschen Wirbelstrasse, bzw. ein mittels einer solchen Wandlervorrichtung gebildetes Meßsystem.

In der Prozeßmeß- und Automatisierungstechnik werden für die Messung von physikalischen Meßgrößen fluider Meßstoffe, wie z.B. eines Drucks und/oder einer Strömungsgeschwindigkeit eines in einer Rohrleitung strömenden fluiden Meßstoffs, oftmals dem Konvertieren der zu erfassenden Meßgröße in ein elektronisch auswertbares Meßsignal dienliche Wandlervorrichtungen mit einem Verformungskörper und einem daran angebrachten bzw. darauf plazierten Sensorelement verwendet, wobei der Verformungskörper dafür eingerichtet ist, in Abhängigkeit einer darauf einwirkenden mechanischen Kraft und/oder in Abhängigkeit einer Temperaturänderung zumindest teilweise, gleichwohl reversibel verformt zu werden, derart, daß auch das Sensorelement eine zumindest eine elektrische Größe des Sensorelements, beispielsweise nämliche einen ohmschen Widerstand, eine Kapazität oder eine Induktivität bzw. eine Impedanz, beeinflussende Gestaltänderung erfährt, und wobei der Verformungskörper dafür eingerichtet ist, auf einer dem Sensorelement abgewandten Seite vom jeweiligen Meßstoff kontaktiert zu werden, derart, daß die Gestaltänderung der Oberfläche des Sensorelements zumindest anteilig durch eine vom fluiden Meßstoff auf den Verformungskörper übertragene Kraft und/oder durch eine zwischen Verformungskörper bzw. Sensorelement und Meßstoff etablierte Temperaturdifferenz bewirkt ist. Zusätzlich kann der Verformungskörper auch noch aktiv bzw. aktorisch zu mechanischen Schwingungen um eine statische Ruhelage angeregt werden, beispielsweise nämlich zu von einer Dichte bzw. Viskosität des jeweiligen Meßstoffs abhängigen Resonanzschwingungen. Als Beispiele für solche - in der industriellen Meß- und Automatisierungstechnik seit langem etablierte - Wandlervorrichtungen bzw. damit gebildete Meßsysteme sind u.a. anderem dem Messen einer Volumendurchflußrate bzw. einer Strömungsgeschwindigkeit dienliche Wirbel-Durchfluß-Meßgeräte, dem Messen einer Massendurchflußrate bzw. einer Dichte dienliche vibronische Massendurchfluß- und/oder Dichte-Meßgeräte, aber auch dem Messen eines Druckes und/oder einer Temperatur dienliche Druck- bzw. Temperatur-Meßgeräte oder auch sonarbasierte, insb. vom Meßstoff induzierten Schall auswertende und/oder dem Analysieren von mehrphasigen Meßstoffen (Dispersionen) dienliche, Durchfluß-Überwachungssysteme zu nennen, wie sie u.a. auch aus der US-A 2005/0044966, der US- 2005/0125170, der US-A 2005/0155437, der US-A 2006/0081069, der US-A 2006/0169058, der US-A 2006/0230841, der US-A 2006/0254363, der US-A 2006/0266127, der US-A 2007/0000334, der US-A 2008/0072686, der US-A 2009/030121, der US-A 2011/0154913, der US-A 2011/0247430, der US-A 2012/0073384, der US-A 2014/0060154, der US-A 2015/0268082, der US-A 57 05 754, der US-A 60 03 384, der US-A 61 01 885, der US-B 62 23 605, der US-B 63 52 000, der US-B 69 10 387, der US-B 69 38 496, der WO-A 2014/102036, der WO-A 2014/102037, der WO-A 2014/198494, der WO-A 2014/198495 oder der WO-A 2015/135738 bekannt sind bzw. wie sie u.a. auch von der Anmelderin selbst unter der Warenbezeichnung "Prowirl D 200", "Prowirl F 200", "Prowirl O 200", "Prowirl R 200", "Promass 84F", "Promass 80S","Promass 83X", "Cerabar PMC71", oder "Cerabar PMP51" angeboten werden. DE102013010015-A1 offenbart einen Drucksensor für ein fluides Medium mit einem abfragbaren Oberflächen-Wellen-Sensorelement. In einem Innenraum ist eine Membran angeordnet, die auf einer Seite von dem fluiden Medium beaufschlagbar ist, wobei das OFW-Sensorelement zum Detektieren einer Formänderung der Membran in Abhängigkeit von einer Druckdifferenz ausgebildet ist. Eine Auswerteelektronik ist eingerichtet um Signale des Drucksensors zu senden und zu empfangen. DE19856951-A1 offenbart eine Sensoranordnung zur Auswertung eines einwirkenden Drucks mit einem piezoelektrischen Kristall als Messelement auf einer Membran. Das Messelement ist mit Interdigitalwandlern versehen, zur Erzeugung und zum Empfang der Oberflächenwellen, wobei zwischen den Interdigitalwandlern eine Messstrecke oder eine Oszillatorschaltung gebildet ist. Die reflektierten Signale werden im Interdigitalwandler rückgewandelt und als Pulsfolge an die Sende- und Empfangseinheil abgestrahlt. Die Laufzeitänderung der Oberflächenwelle in Abhängigkeit der Ausbreitungsbedingungen wie z.B. mechanischen Spannungen wird als Messgrösse genutzt.

Der Verformungskörper kann demnach beispielsweise scheibenförmig oder auch röhrenförmig ausgebildet sein, mithin mittels einer kreisscheibenförmigen Membran und/oder mittels eines Rohres gebildet sowie zudem dafür eingerichtet sein, aus einer statischen Ruhelage ausgebogen und/oder gedehnt zu werden, beispielsweise aufgrund einer veränderlichen Krafteinwirkung und/oder aufgrund von aktiv angeregten bzw. erzwungenen mechanischen Schwingungen. Als Material für den Verformungskörper kommen regelmäßig Keramik oder Metall, beispielsweise nämlich Edelstahl, Titan, Tantal oder Nickelbasislegierungen, zum Einsatz. Das vorbezeichnete Sensorelement wiederum kann beispielsweise mittels eines Dehnungsmeßstreifens, einer Relativbewegungen erfassenden Induktionsspule bzw. eines Relativbewegungen erfassenden Kondensators gebildet bzw. Bestandteil einer Meßbrückenschaltung sein.

Nicht zuletzt aufgrund der großen Nähe des Sensorelements zum Meßstoff bzw. der zumeist hohen thermischen Leitfähigkeit des Verformungskörpers einerseits sowie der limitierten Temperaturfestigkeit bzw. -stabilität der für das Sensorelement bzw. dessen Verbindung mit dem Verformungskörper regelmäßig verwendeten Materialien anderseits ist der Einsatz von Wandlervorrichtungen der in Rede stehenden Art zumeist für solche Meßstellen vorbehalten, bei denen eine maximale Meßstoff-Temperatur bei höchsten 400°C spezifiziert ist. Gleichwohl besteht fortwährend auch ein Bedarf, solche - nicht zuletzt auch hinsichtlich des damit verwirklichten, zumal vielseitig einsetzbaren Wandler- bzw. Meßprinzips wie auch wegen der damit regelmäßig erzielbaren hohen Meßgenauigkeiten - bewährten Wandlervorrichtungen auch in solchen Meßstellen einzusetzen, bei denen Meßstoff-Temperaturen von mehr als 400°C spezifiziert sind, beispielsweise zum Messen von Meßgrößen eines einer Konversion ("Cracken") unterzogenen, mithin eine Temperatur von über 450°C aufweisenden Erdöls, und/oder zum Messen von Meßgrößen eines hocherhitzten, beispielweise nämlich bei vorbezeichneter Konversion verwendeten flüssigen Wärmeträgers, wie z.B. einem Thermalöl oder einer Salzschmelze. Ausgehend vom vorbezeichneten Stand der Technik besteht eine Aufgabe der Erfindung darin, den Aufbau von einen dem Wandeln von Kräften und/oder Temperaturen dienlichen Verformungskörper aufweisenden Wandlervorrichtungen dahingehend zu verbessern, daß diese auch Meßstoff-Temperaturen von mehr als 400°C ausgesetzt werden können bzw. daß damit auch Meßgrößen von mehr als 400°C aufweisenden Meßstoffen erfaßbar sind.

Zur Lösung der Aufgabe besteht die Erfindung in einer Wandlervorrichtung nach Anspruch 1.

Darüberhinaus besteht die Erfindung auch in einem Meßsystem, umfassend: eine solche Wandlervorrichtung sowie eine mit nämlicher Wandlervorrichtung, insb. mit einer Antenne der Wandlervorrichtung bzw. mit einem Wellenleiter der Wandlervorrichtung, elektrisch gekoppelte Meßelektronik, wobei die Meßelektronik dafür eingerichtet ist, wenigstens ein die Wandlervorrichtung speisendes und/oder ansteuerndes elektrisches Treibersignal zu generieren und in die Wandlervorrichtung, insb. nämlich in eine Antenne der Wandlervorrichtung bzw. einen Wellenleiter der Wandlervorrichtung, einzukoppeln, und wobei die Meßelektronik dafür eingerichtet ist, ein von der Wandlervorrichtung, insb. nämlich von einer Antenne der Wandlervorrichtung bzw. einem Wellenleiter der Wandlervorrichtung, geliefertes Meßsignal zu empfangen und auszuwerten, insb. nämlich mittels des Meßsignals einen ein Ausmaß einer momentanen Gestaltänderung des Funksensors quantifizierenden Meßwert und/oder einen eine Frequenz einer periodischen Gestaltänderung des Funksensors quantifizierenden Meßwert zu ermitteln.

Desweiteren besteht die Erfindung auch darin eine solche Wandlervorrichtung bzw. ein solches Meßsystems zum Erfassen wenigstens einer physikalischen Meßgröße eines, beispielsweise zumindest zeitweise strömenden und/oder zumindest zeitweise eine Meßstoff-Tempratur von mehr als 400°C aufweisenden, fluiden Meßstoffs zu verwenden, beispielsweise nämlich zum Erfassen einer Temperatur eines fluiden Meßstoffs und/oder zum Erfassen einer Dichte eines fluiden Meßstoff und/oder zum Erfassen eines Drucks in einem fluiden Meßstoff und/oder zum Erfassen einer Strömungsgeschwindigkeit eines in einer Rohrleitung geführten fluiden Meßstoffs und/oder zum Erfassen von Druckschwankungen in einer in einem strömenden fluiden Meßstoff ausgebildeten Kármánschen Wirbelstrasse, und zum Erzeugen von nämliche Meßgröße repräsentierenden, insb. digitalen, Meßwerten zu verwenden.

Nach einer ersten Ausgestaltung der Wandlervorrichtung der Erfindung ist ferner vorgesehen, daß der Funksensor dafür eingerichtet ist, empfangene elektromagnetische Freiraumwellen in dazu, insb. um wenigstens 1 µs (Mikrosekunde), zeitverzögert abgehende elektromagnetische Freiraumwellen zu konvertieren.

Nach einer zweiten Ausgestaltung der Wandlervorrichtung der Erfindung ist ferner vorgesehen, daß der Funksensor dafür eingerichtet ist, entlang der Oberfläche propagierende akustische Oberflächenwellen zu reflektieren, insb. derart, daß von einer Sende- und Empfangszone abgehende akustische Oberflächenwellen in dazu, insb. um wenigstens 1 µs (Mikrosekunde), zeitverzögert auf nämliche Sende- und Empfangszone auftreffende akustische Oberflächenwellen konvertiert werden.

Nach einer dritten Ausgestaltung der Wandlervorrichtung der Erfindung ist ferner vorgesehen, daß der Verformungskörper dafür eingerichtet ist, auf eine darauf - insb. zumindest zeitweise mit einem periodisch ändernden Betrag und/oder zumindest zeitweise mit einer periodisch ändernden Wirkrichtung - einwirkende zeitlich veränderliche mechanische Kraft mit zeitlich ändernden elastischen Verformungen zu reagieren, insb. nämlich mit zeitlich ändernden elastischen Verformungen, die zeitlich ändernde Gestaltänderungen der Oberfläche des Funksensors bewirken.

Nach einer vierten Ausgestaltung der Wandlervorrichtung der Erfindung ist ferner vorgesehen, daß der Verformungskörper dafür eingerichtet ist, auf eine darauf - insb. zumindest zeitweise mit einem periodisch ändernden Betrag und/oder zumindest zeitweise mit einer periodisch ändernden Wirkrichtung - einwirkende zeitlich veränderliche mechanische Kraft, insb. eine durch einen den Verformungskörper kontaktierenden fluiden Meßstoff bewirkte mechanische Kraft, mit mechanischen Schwingungen um eine statische Ruhelage zu reagieren, insb. nämlich mit mechanischen Schwingungen um eine statische Ruhelage, die zeitlich ändernde Gestaltänderungen der Oberfläche des Funksensors bewirken.

Nach einer fünften Ausgestaltung der Wandlervorrichtung der Erfindung ist ferner vorgesehen, daß der Verformungskörper dafür eingerichtet ist, zum Bewirken der zeitlich ändernden Gestaltänderungen der Oberfläche des Funksensors vibrieren gelassen zu werden.

Nach einer sechsten Ausgestaltung der Wandlervorrichtung der Erfindung ist ferner vorgesehen, daß der Verformungskörper in einer statischen Ruhelage mechanisch vorgespannt, insb. nämlich elastisch gedehnt, ist.

Nach einer siebenten Ausgestaltung der Wandlervorrichtung der Erfindung ist ferner vorgesehen, daß der Verformungskörper dafür eingerichtet ist, auf einer dem Funksensor abgewandten Seite von einem, insb. zumindest zeitweise strömenden, fluiden Meßstoff kontaktiert zu werden, insb. derart, daß die Gestaltänderung der Oberfläche des Funksensors zumindest anteilig durch eine vom fluiden Meßstoff auf den Verformungskörper übertragene Kraft und/oder durch eine zwischen Meßstoff und Verformungskörper etablierte Wärmeübertragung bewirkt ist.

Nach einer achten Ausgestaltung der Wandlervorrichtung der Erfindung ist ferner vorgesehen, daß der Verformungskörper zumindest anteilig aus einem Metall, beispielsweise nämlich einem Edelstahl, Titan, Tantal oder einer Nickelbasislegierung, besteht.

Nach einer neunten Ausgestaltung der Wandlervorrichtung der Erfindung ist ferner vorgesehen, daß der Verformungskörper zumindest anteilig aus einer Keramik besteht.

Nach einer zehnten Ausgestaltung der Wandlervorrichtung der Erfindung ist ferner vorgesehen, daß der Verformungskörper scheibenförmig ausgebildet ist.

Nach einer elften Ausgestaltung der Wandlervorrichtung der Erfindung ist ferner vorgesehen, daß der Verformungskörper eine, beispielsweise kreisscheibenförmige, Membran aufweist bzw. mittels einer, beispielsweise Membran gebildet ist. Diese Ausgestaltung der Erfindung weiterbildend ist ferner vorgesehen, daß der Funksensor auf einer Seite der Membran positioniert und mit dieser, beispielsweise durch Kleben, stoffschlüssig verbunden ist.

Nach einer zwölften Ausgestaltung der Wandlervorrichtung der Erfindung ist ferner vorgesehen, daß der Verformungskörper eine, beispielsweise kreisscheibenförmige, Membran aufweist bzw. mittels einer, beispielsweise kreisscheibenförmigen, Membran gebildet ist, und daß der Verformungskörper eine, beispielsweise paddelförmige und/oder zumindest abschnittsweise keilförmige und/oder zumindest abschnittsweise stabförmige, Sensorfahne aufweist bzw. mittels einer, beispielsweise paddelförmigen und/oder zumindest abschnittsweise keilförmigen und/oder zumindest abschnittsweise stabförmigen, Sensorfahne gebildet ist. Der Funksensor auf einer Seite der Membran positioniert und mit dieser, beispielsweise durch Kleben, stoffschlüssig verbunden sein, während die Sensorfahne auf einer dem Funksensor abgewandten Seite der Membran positioniert sein kann. Diese Ausgestaltung der Erfindung weiterbildend ist ferner vorgesehen, daß die Sensorfahne dafür eingerichtet ist, eine darauf einwirkende Kraft in eine die Gestaltänderung der Oberfläche des Funksensors bewirkende Verformung der Membran zu wandeln und/oder in ein Lumen eines Rohrs eingesetzt bzw. von einem in einem Lumen eines Rohr strömenden fluiden Meßstoff umströmt zu werden. Insbesondere kann die die Sensorfahne dafür eingerichtet sein, eine darauf einwirkende, von einem fluiden Meßstoff, beispielsweise nämlich durch Druckschwankungen innerhalb des Meßstoffs, bewirkte Kraft in eine die Gestaltänderung der Oberfläche des Funksensors bewirkende Verformung der Membran zu wandeln.

Nach einer dreizehnten Ausgestaltung der Wandlervorrichtung der Erfindung ist ferner vorgesehen, daß der Verformungskörper röhrenförmig ausgebildet ist.

Nach einer vierzehnten Ausgestaltung der Wandlervorrichtung der Erfindung ist ferner vorgesehen, daß der Verformungskörper ein, insb. zumindest abschnittsweise gebogenes und/oder zumindest abschnittsweise gerades, Rohr aufweist bzw. mittels eines, insb. zumindest abschnittsweise gebogenen und/oder zumindest abschnittsweise geraden, Rohres gebildet ist.

Nach einer fünfzehnten Ausgestaltung der Wandlervorrichtung der Erfindung ist ferner vorgesehen, daß der, insb. röhrenförmig ausgebildete bzw. mittels eines Rohrs gebildete, Verformungskörper ein von einer, insb. metallischen, Wandung umhülltes Lumen aufweist, daß dafür eingerichtet ist, einen fluiden, insb. zumindest zeitweise strömenden, Meßstoff zu führen. Diese Ausgestaltung der Erfindung weiterbildend ist ferner vorgesehen, daß der Funksensor auf einer dem Lumen abgewandten Seite der Wandung positioniert ist und/oder daß der Funksensor mit der Wandung verbunden ist.

Nach einer sechzehnten Ausgestaltung der Wandlervorrichtung der Erfindung ist ferner vorgesehen, daß der Funksensor wenigstens einen, beispielsweise mit wenigstens einer Antenne elektrisch verbundenen, Interdigitalwandler aufweist.

Nach einer siebzehnten Ausgestaltung der Wandlervorrichtung der Erfindung ist ferner vorgesehen, daß der Funksensor wenigstens eine, insb. mit wenigstens einem Interdigitalwandler elektrisch verbundene, Antenne zum Konvertieren von damit empfangenen elektromagnetischen Freiraumwellen in eine leitungsgeführte elektrische Wechselspannung und/oder zum Konvertieren einer angelegten elektrischen Wechselspannung in vom Funksensor abgehende elektromagnetische Freiraumwellen aufweist.

Nach einer ersten Weiterbildung der Erfindung umfaßt die Wandlervorrichtung weiters: einen, insb. auf dem Verformungskörper positionierten und/oder stoffschlüssig damit verbundenen, Aktuator, der dafür eingerichtet ist, den Verformungskörper elastisch zu verformen, beispielsweise derart, daß der Verformungskörper zumindest zeitweise mechanischen Schwingungen um eine statische Ruhelage ausführt und/oder derart, daß der Verformungskörper zumindest zeitweise aus einer statischen Ruhelage ausgelenkt wird.

Nach einer zweiten Weiterbildung der Erfindung umfaßt die Wandlervorrichtung weiters: wenigstens einen weiteren (zweiten) Funksensor. Nach einer weiteren der Ausgestaltung dieser Weiterbildung der Erfindung ist ferner vorgesehen, daß jeder der wenigstens zwei Funksensoren jeweils eine vorgegebene Bandbreite und eine vorgegebene Mittenfrequenz aufweist, insb. nämlich eine Mittenfrequenz, die von der Mittenfrequenz des jeweils anderen um mehr abweicht als eine Summe der Bandbreiten der beiden Funksensoren abweicht.

Nach einer dritten Weiterbildung der Erfindung umfaßt die Wandlervorrichtung weiters: wenigstens eine in einem, beispielsweise festen, Abstand zum Funksensor positionierte, beispielsweise eine Antenne und/oder einen Wellenleiter aufweisende, Sende- und Empfangseinrichtung, die dafür eingerichtet ist, eine angelegte elektrische Wechselspannung in in Richtung des Funksensor propagierende elektromagnetische Freiraumwellen zu transformieren, und die dafür eingerichtet ist, vom Funksensor abgehende elektromagnetische Freiraumwellen zu empfangen und in eine leitungsgeführte elektrische Wechselspannung zu transformieren.

Nach einer Ausgestaltung dieser Weiterbildung der Erfindung ist ferner vorgesehen, daß die Sende- und Empfangseinrichtung einen in einem, insb. festen, Abstand zum Funksensor positionierten, insb. mittels eines Metallrohrs gebildeten und/oder als Hohlleiter ausgebildeten,

Wellenleiter aufweist, welcher Wellenleiter dafür eingerichtet ist, elektromagnetische Wanderwellen zu führen und an einem dem Funksensor zugewandten Ende in in Richtung nämlichen Funksensors propagierende elektromagnetische Freiraumwellen zu transformieren, und welcher Wellenleiter dafür eingerichtet ist, vom Funksensor abgehende elektromagnetische Freiraumwellen über nämliches Ende zu empfangen und in im Wellenleiter propagierende elektromagnetische Wanderwellen zu transformieren.

Nach der Erfindung umfaßt die Wandlervorrichtung wenigstens eine in einem, beispielsweise festen, Abstand zum Funksensor positionierte, beispielsweise eine Antenne und/oder einen Wellenleiter aufweisende, Sende- und Empfangseinrichtung,

Sende- und Empfangseinrichtung dafür eingerichtet ist, eine angelegte elektrische Wechselspannung in in Richtung des Funksensor propagierende elektromagnetische Freiraumwellen zu transformieren, und wobei die Sende- und Empfangseinrichtung dafür eingerichtet ist, vom Funksensor abgehende elektromagnetische Freiraumwellen zu empfangen und in eine leitungsgeführte elektrische Wechselspannung zu transformieren.

Nach einer ersten Ausgestaltung des Meßsystems der Erfindung ist ferner vorgesehen, daß die Wandlervorrichtung in einem Anschlußstutzen eines Prozeßbehälters, beispielsweise nämlich eine Rohrleitung oder einen Tank, positioniert ist, insb. derart, daß der Verformungskörper zumindest teilweise in ein Lumen nämlichen Prozeßbehälters hineinragt bzw. daß der Verformungskörper von einem in nämlichem Prozeßbehälter geführten Meßstoff kontaktiert werden kann.

Nach einer zweiten Ausgestaltung des Meßsystems der Erfindung ist ferner vorgesehen, daß die Meßelektronik eingerichtet ist, zum Erfassen wenigstens einer physikalischen Meßgröße eines zumindest zeitweise strömenden fluiden Meßstoffs - beispielsweise nämlich zum Erfassen einer Temperatur eines fluiden Meßstoffs und/oder zum Erfassen einer Dichte eines fluiden Meßstoffs und/oder zum Erfassen eines Drucks in einem fluiden Meßstoff und/oder zum Erfassen einer Strömungsgeschwindigkeit eines in einer Rohrleitung geführten fluiden Meßstoffs und/oder zum Erfassen von Druckschwankungen in einer in einem strömenden fluiden Meßstoff ausgebildeten Kármánschen Wirbelstrasse - basierend auf einer im Meßsignal enthaltenen Laufzeitinformation einen eine Frequenz einer periodischen Gestaltänderung des Funksensors quantifizierenden Meßwert zu ermitteln und/oder basierend auf einem im Meßsignal enthaltenen Amplitudenspektrum einen einen ein Ausmaß einer momentanen Gestaltänderung des Funksensors quantifizierenden Meßwert zu ermitteln.

Die Erfindung sowie vorteilhafte Ausgestaltungen davon werden nachfolgend anhand von Ausführungsbeispielen näher erläutert, die in den Figuren der Zeichnung dargestellt sind. Gleiche bzw. gleichwirkende oder gleichartig fungierende Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet.

Im einzelnen zeigen:
- Fig. 1, 2: schematisch im Schnitt jeweils ein Meßsystem mit einer Wandlervorrichtung zum Messen eines fluiden Meßstoffs; das Messsystem nach Fig. 2 entspricht nicht der beanspruchten Erfindung;
- Fig. 3a, b, c: einen für die Bildung eines Meßsystems bzw. einer Wandlervorrichtung gemäß den Fig. 1, 2 bzw. 4 geeigneten Verformungskörper;
- Fig. 4: schematisch im Schnitt eine weitere Variante eines Meßsystem mit einer Wandlervorrichtung zum Messen eines fluiden Meßstoffs;
- Fig. 5: schematisch einen für die Bildung eines Meßsystems bzw. einer Wandlervorrichtung gemäß den Fig. 1, 2 bzw. 4 geeigneten Funksensor; und
- Fig. 6: schematisch eine Anordnung von zwei für die Bildung eines Meßsystems bzw. einer Wandlervorrichtung gemäß den Fig. 1, 2 bzw. 4 geeigneten Funksensoren.

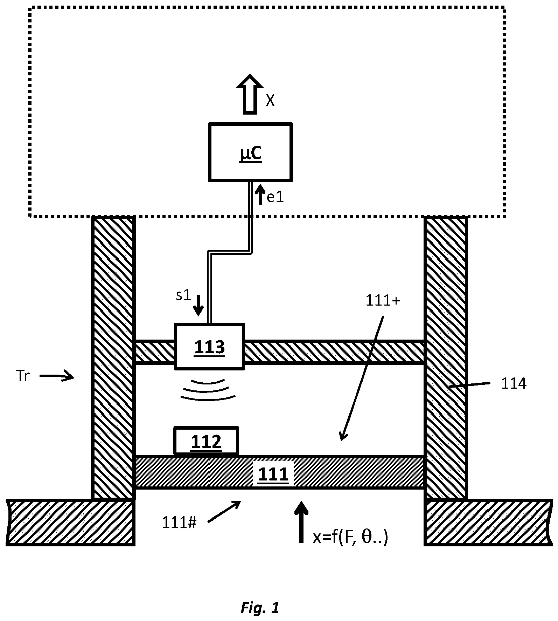

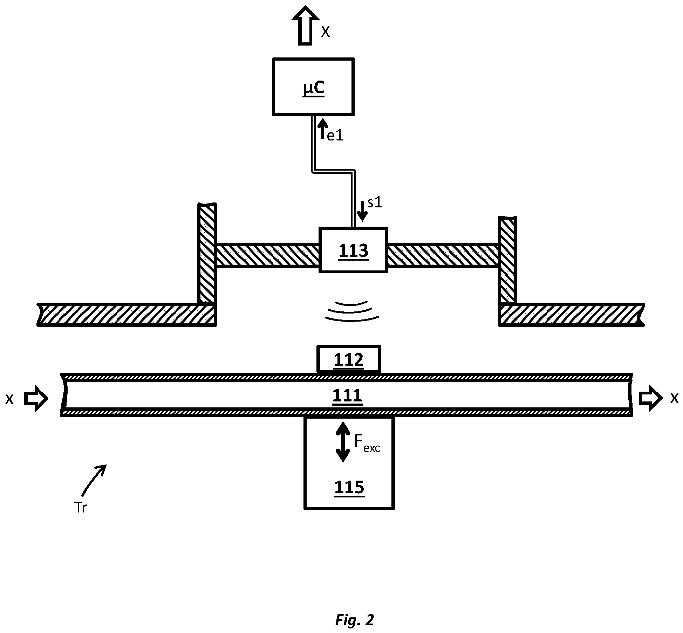

In der Fig. 1 und 2 ist schematisch jeweils ein mittels einer einen, insb. monolithischen,

Verformungskörper 111 und einen stoffschlüssig damit verbundenen Funksensor 112 aufweisenden Wandlervorrichtung Tr gebildetes Meßsystem gezeigt. Zusätzlich zur vorbezeichneten Wandlervorrichtung Tr umfaßt das Meßsystem, wie auch in den Fig. 1 bzw. 2 dargestellt, desweiteren eine mit der Wandlervorrichtung Tr elektrisch gekoppelte, beispielsweise mittels eines Mikroprozessors und/oder eines digitalen Signalprozessors (DSP) gebildete, Meßelektronik µC.

Nämliche Meßelektronik µC ist sowohl dafür eingerichtet, wenigstens ein die Wandlervorrichtung Tr speisendes und/oder ansteuerndes elektrisches Treibersignal s1 zu generieren und in die Wandlervorrichtung Tr einzukoppeln, als auch dafür, ein von der Wandlervorrichtung geliefertes Meßsignal e1 zu empfangen und auszuwerten.

Die Wandlervorrichtung Tr bzw. das damit gebildete Meßsystem sind im besonderen dafür vorgesehen bzw. eingerichtet, wenigstens eine, insb. zeitlich veränderliche, physikalische Meßgröße x eines fluiden Meßstoffs, beispielsweise auch eines zumindest zeitweise strömenden und/oder zumindest zeitweise eine Meßstoff-Tempratur θ von mehr als 400°C aufweisenden fluiden Meßstoffs, zu erfassen bzw. zu messen, beispielsweise nämlich wenigstens einen die Meßgröße x repräsentierenden, insb. digitalen, Meßwert X zu generieren bzw. fortwährend solche Meßwerte X zu ermitteln und auszugeben. Die Meßwerte X können beispielsweise mittels einer in der Meßelektronik µC vorgesehenen Anzeigeeinrichtung vor Ort visualisiert und/oder - drahtgebunden via ggf. angeschlossenen Feldbus und/oder drahtlos per Funk - an ein elektronisches Datenverarbeitungssystem, etwa eine speicherprogrammierbare Steuerung (SPS) und/oder einen Prozeßleitstand, übermittelt werden.

Die Wandlervorrichtung Tr kann ferner dafür eingerichtet sein, in einem Anschlußstutzen eines Prozeßbehälters, beispielsweise einem Tank oder eine Rohrleitung, positioniert zu werden bzw., wie u.a. auch in Fig. 1 schematisiert dargestellt, in einem Anschlußstutzen eines Prozeßbehälters positioniert sein, beispielsweise derart, daß der Verformungskörper zumindest teilweise in ein Lumen nämlichen Prozeßbehälters hineinragt bzw. daß der Verformungskörper von einem in nämlichem Prozeßbehälter geführten Meßstoff kontaktiert werden kann bzw. kontaktiert wird.

Der vorbezeichnete Prozeßbehälterkann beispielsweise als Anlagenkomponente eines Wärmeversorgungsnetzes oder eines Turbinenkreislaufes ausgebildet, mithin kann der Meßstoff beispielsweise Dampf, insb. auch gesättigter Dampf oder überhitzter Dampf, oder beispielsweise auch ein aus einer Dampfleitung abgeführtes Kondensat sein. Meßstoff kann aber beispielsweise auch ein Thermalöl oder beispielsweise eine Salzschmelze sein. Als Material für den Verformungskörper 111 kommen im besonderen Metalle, beispielsweise nämlich ein Edelstahl, Titan, Tantal oder eine Nickelbasislegierung, bzw. hochfeste technische Keramiken, beispielsweise nämlich (Metall-Oxid-Keramiken, wie etwa Aluminiumoxid-Keramiken (Al₂O₃) oder Zirkonoxid-Keramiken(ZrO₂), in Frage. Die stoffschlüssige Verbindung von Verformungskörper 111 und Funksensor 112 kann z.B. eine Lötverbindung oder beispielsweise eine durch Kleben hergestellte adhäsive Verbindung sein.

Bei der mittels der Wandlervorrichtung Tr zu erfassenden Meßgröße wiederum kann es sich z.B. um eine einen Druck p, eine Temperatur θ, eine Viskosität und/oder eine Dichte ρ eines fluiden Meßstoff oder beispielsweise auch um eine Strömungsgeschwindigkeit u eines in einer Rohrleitung geführten fluiden Meßstoffs bzw. von einer Strömungsgeschwindigkeit abhängige, beispielsweise auch zumindest zeitweise periodische, Druckschwankungen p(t) in einer im strömenden fluiden Meßstoff ausgebildeten Kármánschen Wirbelstrasse handeln. Dementsprechend kann das Meßsystem auch als ein Druck- oder ein Temperatur-Meßgerät oder beispielsweise auch als ein Vortex-Durchflußmeßgerät, ein vibronisches Dichte- und/oder Viskositäts-Meßgerät oder ein sonarbasiert arbeitendes bzw. vom Meßstoff induzierten Schall auswertendes Durchfluß-Überwachungsgerät ausgebildet bzw. mittels eines solchen Meß- bzw. Überwachungsgeräts gebildet sein. Dementsprechend kann der Verformungskörper 111, wie auch in Fig. 1 angedeutet, beispielsweise zumindest abschnittsweise membranartig bzw. scheibenförmigen ausgebildet sein. Alternativ dazu kann der Verformungskörper aber beispielsweise auch röhrenförmig ausgebildet sein, beispielsweise auch derart, daß der Verformungskörper 111, wie in Fig. 2 dargestellt, ein von einer Wandung umhülltes Lumen aufweist, daß dafür eingerichtet ist, den vorbezeichneten, ggf. auch zumindest zeitweise strömenden Meßstoff zu führen. Daher weist der Verformungskörper 111 gemäß einer weiteren Ausgestaltung der Erfindung eine, beispielsweise auch kreisscheibenförmige, Membran 111a auf bzw. ist der Verformungskörper 111 mittels einer solchen Membran 111a gebildet. Nach einer anderen Ausgestaltung der Erfindung weist der Verformungskörper 111 ein Rohr auf bzw. ist der Verformungskörper 111 mittels eines Rohres gebildet. Nämliches Rohr kann beispielsweise zumindest abschnittsweise gebogen und/oder, wie auch in Fig. 2 gezeigt, zumindest abschnittsweise gerade sein. Darüberhinaus kann das Rohr bzw. der damit gebildete Verformungskörper auch dafür eingerichtet sein, in den Verlauf der vorbezeichneten Rohrleitung eingesetzt zu werden, beispielsweise nämlich mittels Flanschverbindung an den Meßstoff zu- bzw. den Meßstoff wegführende Segmente nämlicher Rohrleitung angeschlossen zu werden. Der Funksensor 112 kann in diesem Fall mit der Wandung des den Verformungskörper bildenden Rohrs verbunden bzw. auf auf einer dem Lumen abgewandten Seite nämlicher Wandung positioniert sein.

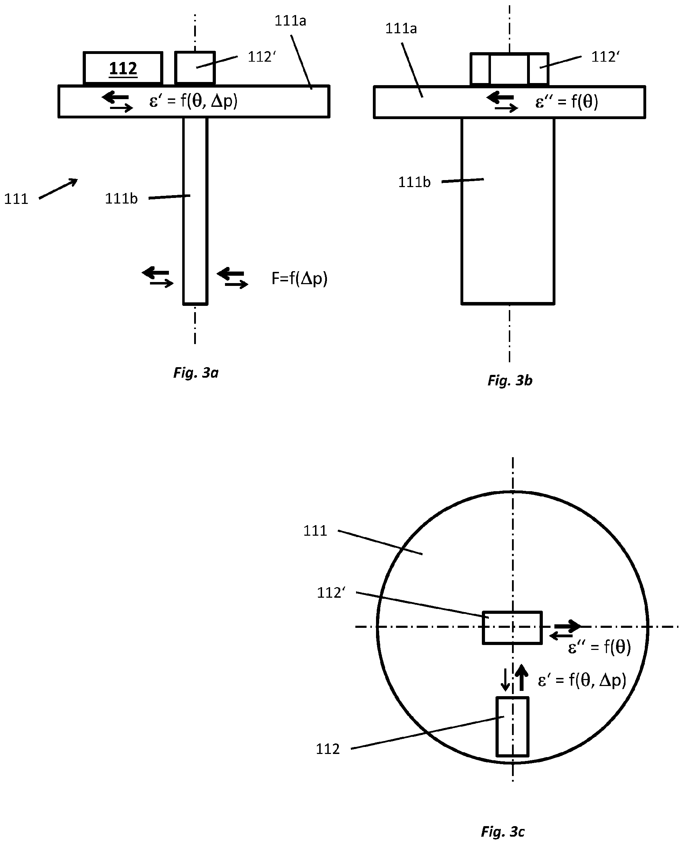

Für den vorbezeichneten Fall, daß der Verformungskörper mittels einer Membran 111a gebildet ist bzw. daß es sich bei dem mittels der Wandlervorrichtung Tr gebildeten Meßsystem um ein Vortex-Durchflußmeßgerät handelt, weist der Verformungskörper 111 nach einer weiteren Ausgestaltung der Erfindung ferner eine, beispielsweise paddelförmige und/oder zumindest abschnittsweise keilförmige und/oder zumindest abschnittsweise stabförmige, Sensorfahne 111a auf bzw. ist der der Verformungskörper 111 mittels einer solchen Sensorfahne 111b gebildet. Nämliche Sensorfahne ist, wie in Fig. 3a, 3b bzw. 3c gezeigt bzw. aus einer Zusammenschau Fig. 1, 3a, 3b bzw. 3c ohne weiteres ersichtlich, auf einer dem Funksensor 112 abgewandten Seite der Membran positioniert und zudem dafür eingerichtet, eine darauf einwirkende Kraft F, beispielsweise nämlich aus Druckschwankungen p(t) in einer Kármánschen Wirbelstrasse resultierende alternierende Kraft, in eine die Gestaltänderung der Oberfläche des Funksensors 112 bewirkende Verformung ε der Membran zu wandeln. Dementsprechend ist die Sensorfahne 111a nach einer weiteren Ausgestaltung dafür eingerichtet, in ein Lumen eines Rohr eingesetzt bzw. von einem in einem Lumen eines Rohr strömenden fluiden Meßstoff umströmt zu werden. Für den anderen erwähnten Fall, daß der Verformungskörper mittels eines Rohrs gebildet ist bzw. daß es sich bei dem mittels der Wandlervorrichtung gebildeten Meßsystem um ein vibronisches Dichte-Meßgerät und/oder ein vibronisches Viskosität-Meßgerät handelt, ist der Verformungskörper nach einer weiteren Ausgestaltung dafür eingerichtet ist, zum Bewirken der zeitlich ändernden Gestaltänderungen der Oberfläche des Funksensors vibrieren gelassen zu werden (Fig. 2), bzw. ist vorgesehen, daß die Wandlervorrichtung weiters einen, beispielsweise direkt auf dem Verformungskörper 111 positionierten und/oder stoffschlüssig damit verbundenen und/oder hochtemperaturtauglichen, Aktuator 115, umfaßt, der dafür eingerichtet ist, den Verformungskörper elastisch zu verformen, insb. derart, daß der Verformungskörper zumindest zeitweise mechanischen Schwingungen um eine statische Ruhelage ausführt und/oder derart, daß der Verformungskörper zumindest zeitweise aus einer statischen Ruhelage ausgelenkt wird. Nämlicher Aktuator kann beispielsweise mittels eines piezoelektrischen Stapelantriebs oder beispielsweise mittels einer Tauchankerspule gebildet sein.

Bei der erfindungsgemäßen Wandlervorrichtung Tr ist der Funksensor 112, wie auch in Fig. 2 angedeutet bzw. aus einer Zusammenschau der Fig. 1 und 2 ohne weiteres ersichtlich, auf dem Verformungskörper 111 positioniert, derart, daß der Funksensor 112 eine dem Verformungskörper abgewandte, freie Oberfläche aufweist. Der Funksensor 112 ist ferner dafür eingerichtet, elektromagnetische Freiraumwellen, insb. Freiraumwellen mit einer in einem Frequenzbereich zwischen 1 GHz und 10 GHz liegenden Trägerfrequenz, zu empfangen und in entlang der dem Verformungskörper abgewandte Oberfläche propagierende akustische Oberflächenwellen zu konvertieren, bzw. entlang nämlicher Oberfläche propagierende akustische Oberflächenwellen in elektromagnetische Freiraumwellen zu konvertieren. Der Funksensor 112 kann beispielsweise mittels wenigstens eines, insb. mit wenigstens einer Antenne elektrisch verbundenen, Interdigitalwandlers gebildet sein, beispielsweise mit einem Trägersubstrat aus Langasit (La₃Ga₅SiO₁₄) und darauf angeordneten Platinelektroden bzw. hinsichtlich des prinzipiellen Aufbaus und der prinzipiellene Funktionsweise einem der in der DE-A 10 2007 021 172, der DE-A 42 00 076 oder in der EP-A 1 752 916 gezeigten Funksensoren (SAW) entsprechen. Demenstprechend weist der Funksensor 112 gemäß einer weiteren Ausgestaltung der Erfindung wenigstens eine, insb. mit wenigstens eine, beispielsweise mit dem vorbezeichneten Interdigitalwandler elektrisch verbundene, Antenne zum Konvertieren von damit empfangenen elektromagnetischen Freiraumwellen in eine leitungsgeführte elektrische Wechselspannung und/oder zum Konvertieren einer angelegten elektrischen Wechselspannung in vom Funksensor 112 abgehende elektromagnetische Freiraumwellen auf. Bei der vorbezeichneten Antenne kann es ich beispielsweise um eine Drahtantenne, eine Planarantenne oder beispielsweise eine Schlitzantennen handeln.

Zwecks Generierung bzw. Verarbeitung von innerhalb der Wandlervorrictung Tr propagierenden elektromagnetische Freiraumwellen umfaßt die Wandlervorrichtung nach einer weiteren Ausgestaltung der Erfindung desweiteren wenigstens eine in einem, insb. festen, Abstand zum Funksensor positionierte, beispielsweise eine Antenne und/oder einen Wellenleiter aufweisende, Sende- und Empfangseinrichtung 113. Nämliche Sende- und Empfangseinrichtung 113 ist im besonderen dafür eingerichtet, eine angelegte elektrische Wechselspannung in in Richtung des Funksensor 112 propagierende elektromagnetische Freiraumwellen zu transformieren bzw. dafür, vom Funksensor 112 abgehende elektromagnetische Freiraumwellen zu empfangen und in eine leitungsgeführte elektrische Wechselspannung zu transformieren. Ferner umfaßt Wandlervorrictung Tr eine sowohl mit dem Verformungskörper als auch der Sende- und Empfangseinrichtung 113 mechanisch verbundenen, beispielsweise nämlich mittels eines Anschlußstutzens gebildeten, Halteeinrichtung 114 zum Fixieren einer Position und einer Lage der Sende- und Empfangseinrichtung 113 relativ zu dem in statischen Ruhelage befindlichen Verformungskörper 111 bzw. dem damit verbundenen Funksensor 112. Die Halteeinrichtung 114 kann beispielsweise als ein Anschlußstutzen für ein die vorbezeichnete Meßelektronik µC aufnehmendes Elektronik-Gehäuse ausgebildet bzw. dafür eingerichtet sein, sowohl die Sende- und Empfangseinrichtung 113 als auch das vorbezeichnete Elektronik-Gehäuse zu haltern.

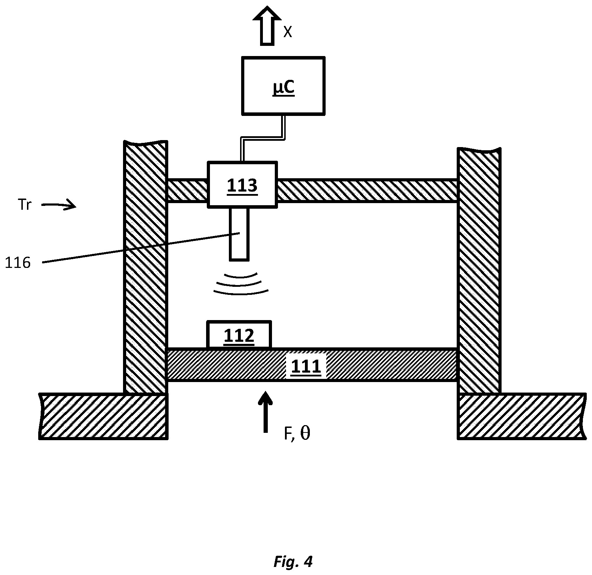

Zur Vermeidung von Störeinflüsse durch allfällige elektromagnetische Fremdfelder im Nahbereich der Wandlereinrichtung Tr bzw. innerhalb derselben weist die die Sende- und Empfangseinrichtung 113 nach einer weiteren Ausgestaltung der Erfindung und wie auch in Fig. 4 schematisiert dargestellt, einen in einem Abstand zum Funksensor 112 positionierten, beispielsweise nämlich mittels eines Metallrohrs gebildeten und/oder als Hohlleiter ausgebildeten, Wellenleiter 116 auf, der dafür eingerichtet ist, elektromagnetische Wanderwellen zu führen und an einem dem Funksensor 112 zugewandten Ende in in Richtung nämlichen Funksensors 112 propagierende elektromagnetische Freiraumwellen zu transformieren, und der dafür eingerichtet ist, vom Funksensor 112 abgehende elektromagnetische Freiraumwellen über nämliches Ende zu empfangen und in im Wellenleiter propagierende elektromagnetische Wanderwellen zu transformieren. Der Wellenleiter 116 kann in vorteilhafter Weise so positioniert sein, daß dessen dem Funksensor 112 zugewandtes - proximales - Ende sehr nahe an den Funksensor 112, beispielsweise nämlich dessen Antenne, heranreicht bzw. einen nur geringen Abstand von wenigen Millimetern, beispielsweise von weniger als 20 mm, insb. nämlich weniger als 10 mm, aufweist. Zudem kann der Wellenleiter 116 in vorteilhafter Weise so ausgebildet sein, daß anderseits ein dem Funksensor 112 abgewandtes - distales - Ende sehr relativ weit entfernt vom Funksensor 112 positioniert ist, beispielsweise nämlich in einem Abstand von mehr als 30 mm, insb. mehr als 50 mm, mithin kann der Wellenleiter eine Länge, gemessen als kürzester Abstand zwischen proximalen und distalen Ende entsprechend mehr als 30 mm, insb. mehr als 50 mm beträgt. Dadurch wird es auf sehr einfache, gleichwohl effektive Weise ermöglicht, elektronische Bauelemente bzw. Baugruppen der Sende- und Empfangseinrichtung 113 in einem vergleichsweise großen, jedenfalls aber für den Erhalt der Betriebstüchtigkeit der Sende- und Empfangseinrichtung 113 ausreichenden Abstand von dem ggf. extrem heißen Verformungskörper bzw. Funksensor anzuordnen, ohne den für die eigentliche Übertragung der elektromagnetische Freiraumwellen zwischen Funksensor und Sende- und Empfangseinrichtung etablierten Abstand zu Lasten einer Störunempfindlichkeit der Wandlereinrichtung gegenüber den erwähnten elektromagnetischen Fremdfelder wieder erhöhen zu müssen.

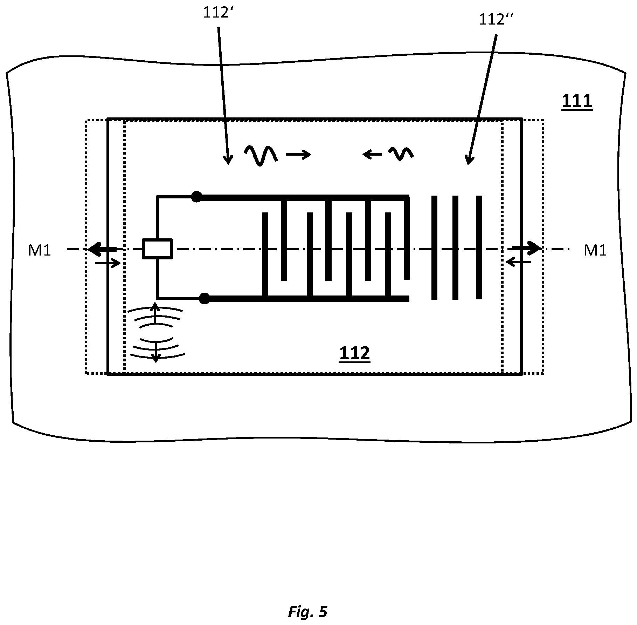

Nach einer weiteren Ausgestaltung der Erfindung ist der Funksensor 112, wie auch in Fig. 5 schematisiert dargestellt, im besonderen dafür eingerichtet, empfangene elektromagnetische Freiraumwellen in dazu zeitverzögert abgehende, beispielsweise nämlich um wenigstens 1 µs (Mikrosekunde) zeitverzögert abgehende, elektromagnetische Freiraumwellen zu konvertieren bzw. ist der Funksensor 112 dafür eingerichtet, entlang der Oberfläche propagierende akustische Oberflächenwellen zu reflektieren, beispielsweise derart, daß von einer Sende- und Empfangszone 112` abgehende akustische Oberflächenwellen mittels einer davon entfernten Reflektorzone 112" in dazu, beispielsweise um wenigstens 1 µs (Mikrosekunde), zeitverzögert auf nämliche Sende- und Empfangszone 112` auftreffende akustische Oberflächenwellen zu konvertieren. Nach einer weiteren Ausgestaltung der Erfindung ist die Meßelektronik dementsprechend ferner eingerichtet, das Treibersignal e1 mit einer getakteten Spannung zu generieren und in die Wandlervorrichtung Tr einzukoppeln. Das Treibersignal kann dementsprechend beispielsweise eine Spannung aufweisen, die als eine Folge von in einem vorgegebenen Takt bzw. einer vorgegebenen Schußrate zu Pulspaketen formierten rechteckförmigen oder sinusförmigen Spannungspulsen ausgebildet ist. Nämlicher Takt kann beispielsweise auch einstellbar, mithin im Betrieb veränderlich sein. Ferner kann die Meßelektronik auch dafür eingerichtet sein, die vorbezeichneten Pulspakete mit einem zumindest vorübergehend konstanten Takt bzw. mit einer Schußrate von mehr als 8 kHz, beispielsweise auch mehr als 20 kHz, zu generieren.

Der Verformungskörper 111 ist ferner dafür eingerichtet, in Abhängigkeit einer darauf einwirkenden, insb. zeitlich veränderlichen, mechanischen Kraft und/oder in Abhängigkeit einer Temperaturänderung bzw. zeitlich veränderlichen Temperaturverteilung innerhalb der Wandlervorrichtung zumindest teilweise verformt, beispielsweise nämlich gedehnt und/oder aus einer statischen Ruhelage bzw. einer Nulllage ausgebogen, zu werden. Die erfindungsgemäße Wandlervorrichtung Tr ist darüberhinaus im besonderen so ausgestaltet, daß, wie auch in Fig. 2 schematisiert dargestellt bzw. aus einer Zusammenschau der Fig. 1 und 5 oder der Fig. 2 und 5 ohne weiteres ersichtlich, durch das vorbezeichnete Verformen des Verformungskörpers 111 zumindest die dem Verformungskörper 111 abgewandte Oberfläche des Funksensors 112 eine - ebenfalls von der in den Verformungskörper 111 eingeleiteten Kraft bzw. von der Temperaturänderung des Verformungskörpers 111 abhängige - eine Ausbreitung, beispielsweise nämlich einen Ausbreitungspfad bzw. eine Laufzeit, von entlang nämlicher Oberfläche propagierenden akustischen Oberflächenwellen beeinflussende Gestaltänderung erfährt. Nach einer weiteren Ausgestaltung der Erfindung sind der Verformungskörper 111 und der Funksensor 112 ferner so ausgestaltet, daß die vorbezeichneten, insb. zeitlich ändernden, Verformungen bzw. Gestaltänderungen zumindest bei innerhalb eines vorgegebenen oder für die Wandlervorrichtung spezifizierten Kräften und/oder Temperaturänderungen jeweils reversibel sind. Der Funksensor 112 weist zudem wenigstens eine Hauptmeßrichtung M1, nämlich eine gedachte Sensorachse auf, die einer Ausrichtung einer die entlang der Oberfläche propagierenden akustischen Oberflächenwellen maximal-sensitiv bzw. maximal-empfindlich beeinflussenden Gestaltänderung entspricht.

Nach einer weiteren Ausgestaltung der Erfindung ist der Verformungskörper 111 im besonderen dafür eingerichtet, auf eine darauf - insb. zumindest zeitweise mit einem periodisch ändernden Betrag und/oder zumindest zeitweise mit einer periodisch ändernden Wirkrichtung - einwirkende zeitlich veränderliche mechanische Kraft, beispielsweise nämlich durch einen den Verformungskörper kontaktierenden fluiden Meßstoff bewirkte Kraft, mit zeitlich ändernden elastischen Verformungen zu reagieren, insb. nämlich mit zeitlich ändernden elastischen Verformungen, die zeitlich ändernde Gestaltänderungen der Oberfläche des Funksensors bewirken und/oder mit mechanischen Schwingungen um eine statische Ruhelage zu reagieren, insb. nämlich mit mechanischen Schwingungen um eine statische Ruhelage, die zeitlich ändernde Gestaltänderungen der Oberfläche des Funksensors bewirken.

Zwecks Generierung des wenigstens einen Meßwerts X (bzw. der Meßwerte) ist die Meßelektronik nach einer weiteren Ausgestaltung der Erfindung dafür eingerichtet, das Meßsignal e1 dadurch auszuwerten, indem die Meßelektronik anhand nämlichen Meßsignals e1 ein ein Ausmaß einer momentanen Gestaltänderung des Funksensors quantifizierenden Meßwert Xₓ und/oder einen eine Frequenz einer periodischen Gestaltänderung des Funksensors quantifizierenden Meßwert ermittelt. Nach einer weiteren Ausgestaltung der Erfindung ist die Meßelektronik im besonderen auch dafür eingerichtet, basierend auf einer im Meßsignal e1 enthaltenen Laufzeitinformation einen eine Frequenz einer periodischen Gestaltänderung des Funksensors quantifizierenden Meßwert zu ermitteln und/oder basierend auf einem im Meßsignal e1 enthaltenen Amplitudenspektrum einen einen ein Ausmaß einer momentanen Gestaltänderung des Funksensors quantifizierenden Meßwert zu ermitteln. Zur Ermittlung des die Frequenz einer periodischen Gestaltänderung des Funksensors quantifizierenden Meßwerts können beispielsweise etablierte Laufzeitmeßverfahren angewendet bzw. mittels der Meßelektronik umgesetzt werden. Das vorbezeichnete im Meßsignal e1 enthaltenen Amplitudenspektrum wiederum kann beispielsweise mittels einer in der Meßelektronik umgesetzten diskreten Fouriertransformation berechnet und hernach entsprechend analysiert, beispielsweise hinsichtlich des einer Lage, Form und/oder Höhe eines maximalen Spitzenwerts ausgewertet werden.

Die die vorbezeichnete Gestaltänderung des Funksensors 112 bzw. von Verformungskörper 111 und Funksensor 112 bewirkende Kraft F bzw. Temperaturänderung θ kann, wie bereits erwähnt bzw. auch in den Fig. 1 und 2 jewiels angedeutet, über eine dem Funksensor abgewandte bzw. dem Meßstoff (bzw. einem dem Führen des Meßstoff dienlichen Lumen der erwähnten Rohrleitung) zugewandte Seite des Verformungskörper eingeleitet sein. Dementsprechend ist der Verformungskörper 111 nach einer weiteren Ausgestaltung der Erfindung ferner dafür eingerichtet, auf einer dem Funksensor abgewandten Seite von einem, beispielsweise zumindest zeitweise strömenden, fluiden Meßstoff kontaktiert zu werden, insb. derart, daß nämliche Gestaltänderung der Oberfläche des Funksensors 112 zumindest anteilig durch eine vom fluiden Meßstoff auf den Verformungskörper übertragene Kraft und/oder durch eine zwischen Meßstoff und Verformungskörper etablierte Wärmeübertragung bewirkt ist. Nicht zuletzt zwecks Erfassung von Temperaturänderungen θ kann es zudem von Vorteil bzw. erforderlich sein, beispielsweise zwecks Erfassung auch von bezüglich der statischen Ruhelage Verformungskörper 111 negativen Temperaturänderungen, daß der Verformungskörper 111 auch in statischer Ruhelage mechanisch vorgespannt, beispielsweise nämlich elastisch gedehnt, ist.

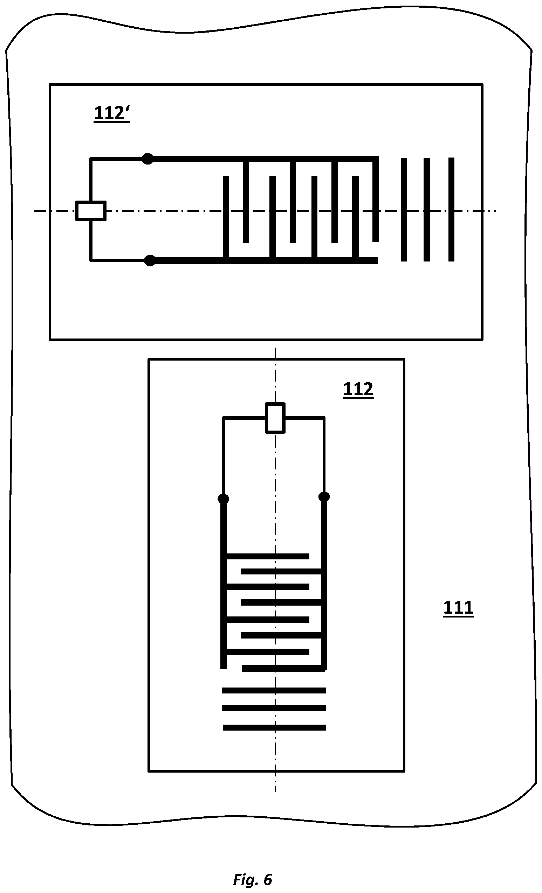

Nicht zuletzt für den vorbezeichneten Fall, daß mittels der Wandlervorrichtung bzw. dem damit gebildten Meßsystem sowohl eine auf den Verformunsgkörper 111 wirkende Kraft F als auch eine Temperaturänderung nämlichen Verformunsgkörpers 111 erfaßt werden sollen, umfaßt die Wandlervorrichtung nach einer weiteren Ausgestaltung wenigstens einen weiteren - zweiten - Funksensor 112`. Zwecks einer möglichst einfachen Separierung der mittels des - ersten - Funksensors 112 bzw. mittels des Funksensor 112' jeweils generierten akustische Oberflächenwellen bzw. der damit jeweils korrespondierenden Anteile in den von der Sende- und Empfangseinrichtung 113 empfangen elektromagnetische Freiraumwellen bzw. der entsprechend korrespondierenden Signalkomponenten im Meßsignale e1 weist jeder der wenigstens zwei Funksensoren nach einer weiteren Ausgestaltung der Erfindung jeweils eine vorgegebene Bandbreite und eine vorgegebene Mittenfrequenz auf, die von der Mittenfrequenz des jeweils anderen um mehr abweicht als eine Summe der Bandbreiten beider Funksensoren 112, 112`. Die beiden Funksensoren können, wie auch in Fig. 6 gezeigt, zudem so auf dem Verformungskörper angeordnet sein, daß die jeweiligen Meßrichtungen M1 der beiden Funksensoren 112, 112' voneinander abweichen, beispielsweise nämlich zueinander orthogonal sind. Alternativ oder in Ergänzung können die beiden Funksensoren auch so angeordnete sein, daß jeder der Funksensoren in einer Zone des Verformungskörpers positioniert ist, die hinsichtlich des Ausmaßes einer lokalen Gestaltänderung und/oder einer Form nämlicher lokalen Gestaltänderung und/oder die hinsichtlich ihrer Reaktion auf die jeweils zu erfassende Meßgröße x von der jeweils anderen Zone abweicht, beispielsweise auch derart, daß - wie beispielsweise auch aus einer Zusammenschau der Fig. 3a, 3b und 3c ohne weiteres ersichtlich, der Funksensor 112 auf eine sowohl aus einer einwirkenden Kraft F als auch aus einer Temperaturänderung θ resultierende Verformung ε' des Verformungskörpers 111 reagiert und daß der Funksensor 112' lediglich auf eine aus einer Temperaturänderung θ resultierende Verformung ε" des Verformungskörpers 111 reagiert.

## Patentansprüche

1. Wandlervorrichtung, insb. zum Erfassen von Druckschwankungen in einer in einem strömenden Fluid ausgebildeten Kármánschen Wirbelstrasse, welche Wandlervorrichtung umfaßt:
- einen, insb. zumindest abschnittsweise membranartigen und/oder zumindest abschnittsweise scheibenförmigen und/oder zumindest abschnittsweise rohrförmigen und/oder metallischen, Verformungskörper (111),
- einen auf dem Verformungskörper (111) positionierten und, insb. durch Kleben, stoffschlüssig damit verbundenen Funksensor (112) mit einer dem Verformungskörper abgewandten Oberfläche,
- sowie wenigstens eine in einem, insb. festen, Abstand zum Funksensor positionierte, insb. eine Antenne und/oder einen Wellenleiter aufweisende, Sende- und Empfangseinrichtung (113);
- wobei die Sende- und Empfangseinrichtung (113) dafür eingerichtet ist, eine angelegte elektrische Wechselspannung in in Richtung des Funksensor (112) propagierende elektromagnetische Freiraumwellen zu transformieren;
- wobei der Funksensor (112) dafür eingerichtet ist, elektromagnetische Freiraumwellen zu empfangen und in entlang der dem Verformungskörper abgewandte Oberfläche propagierende akustische Oberflächenwellen zu konvertieren;
- wobei der Funksensor (112) dafür eingerichtet ist, entlang nämlicher Oberfläche propagierende akustische Oberflächenwellen in elektromagnetische Freiraumwellen zu konvertieren;
- und wobei der Verformungskörper (111) dafür eingerichtet ist, in Abhängigkeit einer darauf einwirkenden, insb. zeitlich veränderlichen und/oder über eine dem Funksensor abgewandte Seite des Verformungskörper eingeleiteten, mechanischen Kraft und/oder in Abhängigkeit einer Temperaturänderung zumindest teilweise verformt, insb. nämlich aus einer statischen Ruhelage ausgebogen und/oder gedehnt, zu werden, derart, daß zumindest die dem Verformungskörper (111) abgewandte Oberfläche des Funksensors (112) eine eine Ausbreitung von entlang nämlicher Oberfläche propagierenden akustischen Oberflächenwellen beeinflussende, insb. zeitlich ändernde und/oder reversible, Gestaltänderung, insb. nämlich eine einen Ausbreitungspfad und/oder eine Laufzeit von entlang nämlicher Oberfläche propagierenden akustischen Oberflächenwellen beeinflussende Gestaltänderung, erfährt;
- und wobei die Sende- und Empfangseinrichtung (113) dafür eingerichtet ist, vom Funksensor (112) abgehende elektromagnetische Freiraumwellen zu empfangen und in eine leitungsgeführte elektrische Wechselspannung zu transformieren, **dadurch gekennzeichnet, dass** die Wandlervorrichtung weiter umfaßt: eine sowohl mit dem Verformungskörper (111) als auch der Sende- und Empfangseinrichtung (113) mechanisch verbundene, mittels eines Anschlußstutzens gebildete Halteeinrichtung (114) zum Fixieren einer Position und einer Lage der Sende- und Empfangseinrichtung (113) relativ zum in einer statischen Ruhelage befindlichen Verformungskörper (111) bzw. dem damit verbundenen Funksensor (112).

2. Wandlervorrichtung nach dem vorherigen Anspruch,
- wobei der Funksensor (112) dafür eingerichtet ist, empfangene elektromagnetische Freiraumwellen in dazu, insb. um wenigstens 1 µs (Mikrosekunde), zeitverzögert abgehende elektromagnetische Freiraumwellen zu konvertieren; und/oder
- wobei der Funksensor (112) dafür eingerichtet ist, entlang der Oberfläche propagierende akustische Oberflächenwellen zu reflektieren, insb. derart, daß von einer Sende- und Empfangszone abgehende akustische Oberflächenwellen in dazu, insb. um wenigstens 1 µs, zeitverzögert auf nämliche Sende- und Empfangszone auftreffende akustische Oberflächenwellen konvertiert werden; und/oder
- wobei der Verformungskörper (111) dafür eingerichtet ist, auf eine darauf - insb. zumindest zeitweise mit einem periodisch ändernden Betrag und/oder zumindest zeitweise mit einer periodisch ändernden Wirkrichtung - einwirkende zeitlich veränderliche mechanische Kraft mit zeitlich ändernden elastischen Verformungen zu reagieren, insb. nämlich mit zeitlich ändernden elastischen Verformungen, die zeitlich ändernde Gestaltänderungen der Oberfläche des Funksensors bewirken; und/oder
- wobei der Verformungskörper (111) dafür eingerichtet ist, auf eine darauf - insb. zumindest zeitweise mit einem periodisch ändernden Betrag und/oder zumindest zeitweise mit einer periodisch ändernden Wirkrichtung - einwirkende zeitlich veränderliche mechanische Kraft, insb. eine durch einen den Verformungskörper kontaktierenden fluiden Meßstoff bewirkte mechanische Kraft, mit mechanischen Schwingungen um eine statische Ruhelage zu reagieren, insb. nämlich mit mechanischen Schwingungen um eine statische Ruhelage, die zeitlich ändernde Gestaltänderungen der Oberfläche des Funksensors bewirken; und/oder
- wobei der Verformungskörper dafür eingerichtet ist, zum Bewirken der zeitlich ändernden Gestaltänderungen der Oberfläche des Funksensors vibrieren gelassen zu werden; und/oder
- wobei der Verformungskörper in einer statischen Ruhelage mechanisch vorgespannt, insb. nämlich elastisch gedehnt, ist; und/oder
- wobei der Verformungskörper (111) dafür eingerichtet ist, auf einer dem Funksensor abgewandten Seite von einem, insb. zumindest zeitweise strömenden, fluiden Meßstoff kontaktiert zu werden, insb. derart, daß die Gestaltänderung der Oberfläche des Funksensors (112) zumindest anteilig durch eine vom fluiden Meßstoff auf den Verformungskörper übertragene Kraft und/oder durch eine zwischen Meßstoff und Verformungskörper etablierte Wärmeübertragung bewirkt ist; und/oder
- wobei der Verformungskörper (111) zumindest anteilig aus einem Metall, insb. einem Edelstahl, Titan, Tantal oder einer Nickelbasislegierung, besteht; und/oder
- wobei der Verformungskörper (111) zumindest anteilig aus einer Keramik besteht; und/oder
- wobei der Verformungskörper (111) scheibenförmig ausgebildet ist; und/oder
- wobei der Funksensor (112) wenigstens einen, insb. mit wenigstens einer Antenne elektrisch verbundenen, Interdigitalwandler aufweist.

3. Wandlervorrichtung nach einem der vorherigen Ansprüche, weiters umfassend: einen, insb. auf dem Verformungskörper (111) positionierten und/oder stoffschlüssig damit verbundenen, Aktuator (115), der dafür eingerichtet ist, den Verformungskörper elastisch zu verformen, insb. derart, daß der Verformungskörper zumindest zeitweise mechanischen Schwingungen um eine statische Ruhelage ausführt und/oder derart, daß der Verformungskörper zumindest zeitweise aus einer statischen Ruhelage ausgelenkt wird.

4. Wandlervorrichtung nach einem der vorherigen Ansprüche,
- wobei der Verformungskörper (111) eine, insb. kreisscheibenförmige, Membran (111a) aufweist bzw. mittels einer, insb. kreisscheibenförmigen, Membran (111a) gebildet ist
- und wobei der Funksensor auf einer Seite der Membran positioniert und mit dieser, insb. durch Kleben, stoffschlüssig verbunden ist.

5. Wandlervorrichtung nach dem vorherigen Anspruch, wobei der Verformungskörper (111) eine, insb. paddelförmige und/oder zumindest abschnittsweise keilförmige und/oder zumindest abschnittsweise stabförmige, Sensorfahne (111b) aufweist bzw. mittels einer, insb. paddelförmigen und/oder zumindest abschnittsweise keilförmigen und/oder zumindest abschnittsweise stabförmigen, Sensorfahne (111b) gebildet ist.

6. Wandlervorrichtung nach dem vorherigen Anspruch,
- wobei die Sensorfahne auf einer dem Funksensor abgewandten Seite der Membran positioniert ist; und/oder
- wobei die Sensorfahne dafür eingerichtet ist, eine darauf einwirkende Kraft in eine die Gestaltänderung der Oberfläche des Funksensors (112) bewirkende Verformung der Membran zu wandeln; und/oder
- wobei die Sensorfahne dafür eingerichtet ist, in ein Lumen eines Rohrs eingesetzt bzw. von einem in einem Lumen eines Rohr strömenden fluiden Meßstoff umströmt zu werden.

7. Wandlervorrichtung nach dem vorherigen Anspruch, wobei die Sensorfahne dafür eingerichtet ist, eine darauf einwirkende, von einem fluiden Meßstoff, insb. nämlich durch Druckschwankungen innerhalb des Meßstoffs, bewirkte Kraft in eine die Gestaltänderung der Oberfläche des Funksensors (112) bewirkende Verformung der Membran zu wandeln.

8. Wandlervorrichtung nach einem der Ansprüche 1 bis 3, wobei der Verformungskörper (111) röhrenförmig ausgebildet ist.

9. Wandlervorrichtung nach einem der vorherigen Ansprüche, wobei der Verformungskörper (111) ein, insb. zumindest abschnittsweise gebogenes und/oder zumindest abschnittsweise gerades, Rohr aufweist bzw. mittels eines, insb. zumindest abschnittsweise gebogenen und/oder zumindest abschnittsweise geraden, Rohres gebildet ist.

10. Wandlervorrichtung nach einem der vorherigen Ansprüche, wobei der, insb. röhrenförmig ausgebildete bzw. mittels eines Rohrs gebildete, Verformungskörper (111) ein von einer, insb. metallischen, Wandung umhülltes Lumen aufweist, daß dafür eingerichtet ist, einen fluiden, insb. zumindest zeitweise strömenden, Meßstoff zu führen.

11. Wandlervorrichtung nach dem vorherigen Anspruch,
- wobei der Funksensor (112) auf einer dem Lumen abgewandten Seite der Wandung positioniert ist; und/oder.
- wobei der Funksensor (112) mit der Wandung verbunden ist.

12. Wandlervorrichtung nach einem der vorherigen Ansprüche, weiters umfassend: wenigstens einen weiteren Funksensor (112').

13. Wandlervorrichtung nach dem vorherigen Anspruch, wobei jeder der wenigstens zwei Funksensoren jeweils eine vorgegebene Bandbreite und eine vorgegebene Mittenfrequenz aufweist, insb. eine Mittenfrequenz, die von der Mittenfrequenz des jeweils anderen um mehr abweicht als eine Summe der Bandbreiten der beiden Funksensoren.

14. Wandlervorrichtung nach dem der vorherigen Anspruch,
- wobei die beiden Funksensoren so auf dem Verformungskörper angeordnet sind, daß jeweilige Meßrichtungen der beiden Funksensoren (112, 112') voneinander abweichen, insb. nämlich zueinander orthogonal sind; und/oder
- - wobei die beiden Funksensoren so auf dem Verformungskörper angeordnet sind, daß jeder der Funksensoren (112, 112') in einer Zone des Verformungskörpers (111) positioniert ist, die hinsichtlich des Ausmaßes einer lokalen Gestaltänderung und/oder einer Form nämlicher lokalen Gestaltänderung und/oder die hinsichtlich ihrer Reaktion auf eine jeweils zu erfassende Meßgröße von der jeweils anderen Zone abweicht, insb. derart, daß der Funksensor (112) auf eine sowohl aus einer einwirkenden Kraft als auch aus einer Temperaturänderung resultierende Verformung des Verformungskörpers (111) reagiert und daß der weitere Funksensor (112') lediglich auf eine aus einer Temperaturänderung resultierende Verformung des Verformungskörpers (111) reagiert.

15. Wandlervorrichtung nach einem der vorherigen Ansprüche, wobei der Funksensor (112) wenigstens eine, insb. mit wenigstens einem Interdigitalwandler elektrisch verbundene, Antenne zum Konvertieren von damit empfangenen elektromagnetischen Freiraumwellen in eine leitungsgeführte elektrische Wechselspannung und/oder zum Konvertieren einer angelegten elektrischen Wechselspannung in vom Funksensor (112) abgehende elektromagnetische Freiraumwellen aufweist.

16. Meßsystem, umfassend:
- eine, insb. in einem Anschlußstutzen eines Prozeßbehälters positionierte, Wandlervorrichtung (Tr) nach einem der vorherigen Ansprüche;
- sowie eine mit nämlicher Wandlervorrichtung (Tr), insb. mit einer Antenne der Wandlervorrichtung bzw. mit einem Wellenleiter der Wandlervorrichtung, elektrisch gekoppelte Meßelektronik (µC),
--die dafür eingerichtet ist, wenigstens ein die Wandlervorrichtung speisendes und/oder ansteuerndes elektrisches Treibersignal (s1) zu generieren und in die Wandlervorrichtung (Tr), insb. nämlich in eine Antenne der Wandlervorrichtung bzw. einen Wellenleiter der Wandlervorrichtung, einzukoppeln,
--und die dafür eingerichtet ist, ein von der Wandlervorrichtung, insb. nämlich von einer Antenne der Wandlervorrichtung bzw. einem Wellenleiter der Wandlervorrichtung, geliefertes Meßsignal (e1) zu empfangen und auszuwerten, insb. nämlich mittels des Meßsignals einen ein Ausmaß einer momentanen Gestaltänderung des Funksensors quantifizierenden Meßwert und/oder einen eine Frequenz einer periodischen Gestaltänderung des Funksensors quantifizierenden Meßwert zu ermitteln.

17. Meßsystem nach dem vorherigen Anspruch,
- wobei die Meßelektronik eingerichtet ist, das Treibersignal mit einer getakteten, insb. nämlich als eine Folge von in einem vorgegebenen und/oder einstellbaren und/oder zumindest vorübergehend konstanten Takt zu Pulspaketen formierten rechteckförmigen oder sinusförmigen Spannungspulsen ausgebildeten, Spannung zu generieren und in die Wandlervorrichtung einzukoppeln; und/oder
- wobei die Meßelektronik eingerichtet ist, basierend auf einer im Meßsignal enthaltenen Laufzeitinformation einen eine Frequenz einer periodischen Gestaltänderung des Funksensors quantifizierenden Meßwert zu ermitteln; und/oder
- wobei die Meßelektronik eingerichtet ist, basierend auf einem im Meßsignal enthaltenen Amplitudenspektrum einen einen ein Ausmaß einer momentanen Gestaltänderung des Funksensors quantifizierenden Meßwert zu ermitteln.

18. Meßsystem nach einem der Ansprüche 16 bis 17,
- wobei die Wandlervorrichtung in einem Anschlußstutzen eines Prozeßbehälters, insb. nämlich eine Rohrleitung oder einen Tank, positioniert ist, insb. derart, daß der Verformungskörper zumindest teilweise in ein Lumen nämlichen Prozeßbehälters hineinragt bzw. daß der Verformungskörper von einem in nämlichem Prozeßbehälter geführten Meßstoff kontaktiert werden kann; und/oder
- wobei die Meßelektronik eingerichtet ist, zum Erfassen wenigstens einer physikalischen Meßgröße eines zumindest zeitweise strömenden fluiden Meßstoffs, insb. nämlich zum Erfassen einer Temperatur eines fluiden Meßstoffs und/oder zum Erfassen einer Dichte eines fluiden Meßstoffs und/oder zum Erfassen eines Drucks in einem fluiden Meßstoff und/oder zum Erfassen einer Strömungsgeschwindigkeit eines in einer Rohrleitung geführten fluiden Meßstoffs und/oder zum Erfassen von Druckschwankungen in einer in einem strömenden fluiden Meßstoff ausgebildeten Kármánschen Wirbelstrasse,
-- basierend auf einer im Meßsignal enthaltenen Laufzeitinformation einen eine Frequenz einer periodischen Gestaltänderung des Funksensors quantifizierenden Meßwert zu ermitteln; und/oder
-- basierend auf einem im Meßsignal enthaltenen Amplitudenspektrum einen einen ein Ausmaß einer momentanen Gestaltänderung des Funksensors quantifizierenden Meßwert zu ermitteln.

19. Verwenden einer Wandlervorrichtung gemäß einem der Ansprüche 1 bis 15 oder eines Meßsystems gemäß einem der Ansprüche 16 bis 18 zum Erfassen wenigstens einer physikalischen Meßgröße (x) eines, insb. zumindest zeitweise strömenden und/oder zumindest zeitweise eine Meßstoff-Tempratur von mehr als 400°C aufweisenden, fluiden Meßstoffs, insb. nämlich zum Erfassen einer Temperatur eines fluiden Meßstoffs und/oder zum Erfassen einer Dichte eines fluiden Meßstoff und/oder zum Erfassen eines Drucks in einem fluiden Meßstoff und/oder zum Erfassen einer Strömungsgeschwindigkeit eines in einer Rohrleitung geführten fluiden Meßstoffs und/oder zum Erfassen von Druckschwankungen in einer in einem strömenden fluiden Meßstoff ausgebildeten Kármánschen Wirbelstrasse, und zum Erzeugen von nämliche Meßgröße (x) repräsentierenden, insb. digitalen, Meßwerten (X).

## Claims

1. A transducer device, in particular for measuring pressure fluctuations in a Kármán vortex street formed in a flowing fluid, wherein said transducer device comprises:
- a deformation element (111), in particular exhibiting a membrane-like form at least in sections and/or a disk-shaped form at least in sections and/or a tubular form at least in sections and/or a metallic form,
- a radio sensor (112) positioned on and firmly bonded to the deformation element (111), in particular using adhesive, with a surface facing away from the deformation element,
- as well as at least one transmitting and receiving device (113) positioned at an, in particular fixed, distance from the radio sensor, in particular exhibiting an antenna and/or a wave guide;
- wherein the transmitting and receiving device (113) is configured to transform an applied electrical AC voltage into electromagnetic free-surface waves propagated in the direction of the radio sensor (112);
- wherein the radio sensor (112) is configured to receive electromagnetic free-surface waves and convert these into acoustic surface waves that are propagated along the surface facing away from the deformation element;
- wherein the radio sensor (112) is configured to convert acoustic surface waves being propagated along said surface into electromagnetic free-space waves;
- and wherein the deformation element (111) is configured to be deformed at least partially on the basis of a mechanical force acting on it, in particular a force that changes over time and/or is applied via a side of the deformation element facing away from the radio sensor, and/or on the basis of a temperature changes, in particular bent out of a static resting position and/or stretched in such a way that at least the surface of the radio sensor (112) facing away from the deformation element (111) experiences deformation, in particular deformation that changes over time and/or is reversible, that influences a propagation of acoustic surface waves propagating along said surface, in particular deformation that influences a propagation path and/or duration of acoustic surface waves propagating along said surface;
- and wherein the transmitting and receiving device (113) is configured to receive electromagnetic free-surface waves being emitted from the radio sensor (112) and transform these into a cable-guided electrical AC voltage, **characterized in that** the transducer device also comprises: a fixture device (114) that is formed using a connecting piece and mechanically connected to both the deformation element (111) and the transmitting and receiving device (113) for fixing a position and an orientation of the transmitting and receiving device (113) relative to the deformation element (111), which is located in a static resting position, or the radio sensor (112) that is connected to this.

2. A transducer device according to the previous claim,
- wherein the radio sensor (112) is configured to convert received electromagnetic free-surface waves into outgoing electromagnetic free-surface waves with a time lag, in particular of at least 1 µs (microsecond); and/or
- wherein the radio sensor (112) is configured to reflect acoustic surface waves being propagated along the surface, in particular in such a way that acoustic surface waves being emitted from a transmission and receiving zone are converted into acoustic surface waves with a time lag, in particular of at least 1 µs, applied to said transmission and receiving zone; and/or
- wherein the deformation element (111) is configured to react to a time-variable mechanical force applied to the deformation element, in particular applied at least temporarily with a changing amount and/or at least temporarily with a periodically changing effective direction, with elastic deformations that change over time, in particular namely with elastic deformations that change over time and lead to changing deformations of the surface of the radio sensor; and/or
- wherein the deformation element (111) is configured to react to a time-variable mechanical force, in particular a mechanical force caused by a fluid medium in contact with the deformation element, applied to the deformation element, in particular applied at least temporarily with a changing amount and/or at least temporarily with a periodically changing effective direction, with mechanical vibrations around a static resting position, in particular with mechanical vibrations around a static resting position that cause time-variable deformations to the surface of the radio sensor; and/or
- wherein the deformation element is configured to allow the radio sensor to vibrate in order to effect the deformation of the surface of the radio sensor based on time; and/or
- wherein the deformation element is mechanically preloaded, in particular namely elastically stretched, in a static resting position; and/or
- wherein the deformation element (111) is configured to be contacted by a fluid medium, in particular a fluid that is at least partially flowing, on a side that faces away from the radio sensor, in particular in such a way that the deformation of the surface of the radio sensor (112) is effected at least partially by a force applied by the fluid medium onto the deformation element and/or by an established heat transfer between the medium and deformation element; and/or
- wherein the deformation element (111) is produced at least partially from a metal, in particular a stainless steel, titanium, tantalum, or a nickel-base alloy; and/or
- wherein the deformation element (111) is produced at least partially from a ceramic; and/or
- wherein the deformation element (111) is produced with a disk shape; and/or
- wherein the radio sensor (112) exhibits at least one electrically connected interdigital transducer, in particular with at least one antenna.

3. A transducer device according to one of the preceding claims, further comprising: an actuator (115), in particular positioned on the deformation element (111) and/or firmly bonded to it, that is configured to elastically deform the deformation element, in particular in such a way that the deformation element at least temporarily produces mechanical vibrations around a static resting position and/or in such a way that the deformation element is moved out of a static resting position at least temporarily.

4. A transducer device according to one of the preceding claims,
- wherein the deformation element (111) exhibits a membrane (111a), in particular with a disk shape, or is formed with a membrane (111a) that is, in particular, disk-shaped
- and wherein the radio sensor is positioned on one side of the membrane and firmly bonded to it, in particular using adhesive.

5. A transducer device according to the previous claim, wherein the deformation element (111) exhibits a sensor flag (111b), in particular exhibiting a paddle shape and/or a wedge shape at least in sections and/or a rod shape at least in sections, or is formed by a sensor flag (111b), in particular exhibiting a paddle shape and/or a wedge shape at least in sections and/or a rod shape at least in sections.

6. A transducer device according to the previous claim,
- wherein the sensor flag is positioned on a side of the membrane that faces away from the radio sensor; and/or
- wherein the sensor flag is configured to convert a force applied to this into a deformation of the membrane that in turn causes a deformation of the surface of the radio sensor (112); and/or
- wherein the sensor flag is configured to be used in a lumen of a pipe or have a fluid medium flow around it in a lumen of a pipe.

7. A transducer device according to the previous claim, wherein the sensor flag is configured to convert a force acting on it by a fluid medium, in particular in the form of pressure fluctuations within the medium, into a deformation of the membrane that in turn deforms the surface of the radio sensor (112).

8. A transducer device according to one of the claims 1 to 3, wherein the deformation element (111) is produced with a tubular form.

9. A transducer device according to one of the preceding claims, wherein the deformation element (111) exhibits a tube, in particular curved at least in sections and/or straight at least in sections, or is formed by a tube, in particular curved at least in sections and/or straight at least in sections.

10. A transducer device according to one of the preceding claims, wherein the deformation element (111), in particular produced with a tubular form or formed by a tube, exhibits a lumen enclosed by a wall, in particular a metallic wall, that is configured to guide a fluid medium, in particular a medium that is flowing at least temporarily.

11. A transducer device according to the previous claim,
- wherein the radio sensor (112) is positioned on a side of the wall facing away from the lumen; and/or
- wherein the radio sensor (112) is connected to the wall.

12. A transducer device according to one of the preceding claims, further comprising: at least one further radio sensor (112').

13. A transducer device according to the previous claim, wherein each of the at least two radio sensors exhibits a predefined bandwidth and a predefined center frequency, in particular a center frequency that deviates from the center frequency of the other respective sensor by more than the total of the bandwidths of the two radio sensors.

14. A transducer device according to the previous claim,
- wherein the two radio sensors are arranged on the deformation element in such a way that the respective measuring directions of the two radio sensors (112, 112') deviate from one another, in particular are namely arranged orthogonally to one another; and/or
∘ wherein the two radio sensors are arranged on the deformation element in such a way that each of the radio sensors (112, 112') is positioned in a zone of the deformation element (111) that deviates from the other respective zone in terms of the extent of a local deformation and/or a form of said local deformation and/or in terms of its reaction to a measured variable to be recorded, in particular in such a way that the radio sensor (112) reacts to a deformation of the deformation element (111) resulting from both a force acting and a temperature change and that the other radio sensor (112') reacts solely to a deformation of the deformation element (111) resulting from a temperature change.

15. A transducer device according to one of the preceding claims, wherein the radio sensor (112) exhibits at least one antenna, in particular electrically connected to at least one interdigital transducer, for converting electromagnetic free-surface waves it receives into a cable-guided electrical AC voltage and/or for converting an applied electrical AC voltage into electromagnetic free-surface waves exiting the radio sensor (112).

16. A measuring system, comprising:
- a transducer device (Tr), in particular positioned in a connecting piece of a vessel, according to one of the preceding claims;
- as well as measuring electronics (µC) that are electrically coupled to said transducer device (Tr), in particular with an antenna of the transducer device or to a wave guide of the transducer device,
∘ that is configured to generate at least one electrical drive signal (s1) that feeds and/or controls the transducer device and to couple into the transducer device (Tr), in particular namely into an antenna of the transducer device or a wave guide of the transducer device,
∘ and that is configured to both receive and evaluate a measurement signal (e1) from the transducer device, in particular namely from an antenna of the transducer device or a wave guide of the transducer device, in particular namely using the measurement signal to determine a measured value that quantifies an extent of a current deformation of the radio sensor and/or a measured value that quantifies a frequency of a periodic deformation of the radio sensor.

17. Measuring system according to the preceding claim,
- wherein the measuring electronics are configured to generate the drive signal with a pulsed voltage, in particular a voltage formed as a consequence of square-wave or sinusoidal voltage pulses formed into pulse bundles in a predefined and/or adjustable and/or at least temporarily constant cycle, and couple into the transducer device; and/or
- wherein the measuring electronics are configured to determine a measured value that qualifies a frequency of a periodic deformation of the radio sensor based on runtime information included in the measurement signal; and/or
- wherein the measuring electronics are configured to determine an extent that qualifies a frequency a current deformation of the radio sensor based on an amplitude spectrum included in the measurement signal.

18. A measuring system according to one of the claims 16 to 17,
- wherein the transducer device is positioned in a connecting piece of a vessel, in particular namely a pipe or a tank, in particular in such a way that the deformation element penetrates at least in part into a lumen of said vessel or that the deformation element can be contacted by a medium being guided in said vessel; and/or
- wherein the measuring electronics are configured to measure at least one physical measured variable of a fluid medium flowing at least temporarily, in particular namely to measure a temperature of a fluid medium and/or to measure a density of a fluid medium and/or to measure a pressure in a fluid medium and/or to measure a flow speed of a fluid medium guided in a pipe and/or to measure pressure fluctuations in a Kármán vortex street formed in a flowing fluid medium,
∘ to determine a measured value that qualifies an extent of a current deformation of the radio sensor based on runtime information included in the measurement signal; and/or
∘ to determine a measured value that qualifies an extent of a current deformation of the radio sensor based on an amplitude spectrum included in the measurement signal.

19. Use of a transducer device according to one of the claims 1 to 15 or of a measuring system according to one of the claims 16 to 18 to record at least one physical measured variable (x) of a fluid medium, in particular at least temporarily flowing and/or at least temporarily exhibiting a medium temperature in excess of 400 °C, in particular namely to measure a temperature of a fluid medium and/or to measure a density of a fluid medium and/or to measure a pressure in a fluid medium and/or to measure a flow speed of a fluid medium routed in a pipe and/or to measure pressure fluctuations in a Kármán vortex street formed in a flowing fluid medium, and to generate measured values (X), in particular digital values, representing said measured variable (x).

## Revendications

1. Dispositif transducteur, notamment destiné à la détection de variations de pression dans une allée de tourbillons selon Karman formée dans une fluide en écoulement, lequel dispositif transducteur comprend :
- un corps déformable (111), notamment au moins partiellement en forme de membrane et/ou au moins partiellement en forme de disque et/ou au moins partiellement en forme de tube et/ou métallique,
- un capteur radio (112) positionné sur le corps déformable (111) et relié à ce même corps par liaison de matière, notamment par collage, avec une surface opposée au corps déformable,
- ainsi qu'au moins un dispositif d'émission et de réception (113) positionné à une distance, notamment fixe, du capteur radio et présentant notamment une antenne et/ou un guide d'ondes ;
- le dispositif d'émission et de réception (113) étant conçu pour convertir une tension électrique alternative appliquée en ondes électromagnétiques en espace libre se propageant en direction du capteur radio (112) ;
- le capteur radio (112) étant conçu pour recevoir des ondes électromagnétiques en espace libre et les convertir en ondes acoustiques de surface se propageant le long de la surface opposée au corps déformable ;
- le capteur radio (112) étant conçu pour convertir en ondes électromagnétiques en espace libre des ondes acoustiques de surface se propageant le long de la même surface ;
- et le corps déformable (111) étant conçu pour être au moins partiellement déformé - notamment pour être déformé et/ou étiré à partir d'une position de repos statique - en fonction d'une force mécanique agissant sur ce même corps, laquelle force est notamment variable dans le temps et/ou introduite par une surface du corps déformable opposée au capteur radio, et/ou en fonction d'une variation de température, de telle manière qu'au moins la surface du capteur radio (112) opposée au corps déformable (111) subit un changement de forme influençant une propagation d'ondes acoustiques de surface se propageant le long de ladite surface, notamment un changement de forme variable dans le temps et/ou réversible, notamment un changement de forme influençant un chemin de propagation et/ou un temps de propagation des ondes acoustiques de surface se propageant le long de ladite surface ;
- et le dispositif d'émission et de réception (113) étant conçu pour recevoir des ondes électromagnétiques en espace libre provenant du capteur radio (112) et pour les convertir en une tension électrique alternative véhiculée par câble, **caractérisé en ce que** le dispositif transducteur comprend en outre : un dispositif de maintien (114) relié mécaniquement aussi bien au corps déformable (111) qu'au dispositif d'émission et de réception (113), lequel dispositif de maintien est formé au moyen d'une tubulure de raccordement, lequel dispositif de maintien est destiné à maintenir une position et une orientation du dispositif d'émission et de réception (113) par rapport au corps déformable (111) se trouvant dans une position de repos statique, ou par rapport au capteur radio (112) qui est relié audit corps déformable.

2. Dispositif transducteur selon la revendication précédente,
- pour lequel le capteur radio (112) est conçu pour convertir des ondes électromagnétiques en espace libre reçues en ondes électromagnétiques en espace libre émises avec un retard d'au moins 1 µs (microseconde) ; et/ou
- pour lequel le capteur radio (112) est conçu pour réfléchir des ondes acoustiques de surface se propageant le long de la surface, notamment de telle sorte que des ondes acoustiques de surface partant d'une zone d'émission et de réception soient converties en ondes acoustiques de surface arrivant sur la même zone d'émission et de réception, notamment avec un retard d'au moins 1 µs ; et/ou
- pour lequel le corps déformable (111) est conçu pour réagir à une force mécanique variable dans le temps agissant sur le même corps - notamment au moins temporairement avec une valeur variable périodiquement et/ou au moins temporairement avec une direction d'action variable périodiquement - avec des déformations élastiques variables dans le temps, notamment avec des déformations élastiques variables dans le temps qui provoquent des changements de forme variables dans le temps de la surface du capteur radio ; et/ou
- pour lequel le corps déformable (111) est conçu pour réagir à une force mécanique variable dans le temps qui agit sur le même corps - notamment au moins temporairement avec une amplitude qui varie périodiquement et/ou au moins temporairement avec une direction d'action qui varie périodiquement - notamment une force mécanique provoquée par un produit fluide en contact avec le corps déformable, par des vibrations mécaniques autour d'une position de repos statique, notamment à savoir par des vibrations mécaniques autour d'une position de repos statique qui provoquent des changements de forme variables dans le temps de la surface du capteur radio ; et/ou
- pour lequel le corps déformable est conçu pour être mis en vibration afin de provoquer les changements de forme de la surface du capteur radio qui varient dans le temps ; et/ou
- pour lequel le corps déformable est précontraint mécaniquement, notamment étiré élastiquement, dans une position de repos statique ; et/ou
- pour lequel le corps déformable (111) est conçu pour être mis en contact, sur un côté opposé au capteur radio, avec un produit fluide s'écoulant notamment au moins temporairement, notamment de telle sorte que le changement de forme de la surface du capteur radio (112) est provoqué au moins en partie par une force transmise par le produit fluide sur le corps déformable et/ou par un transfert de chaleur établi entre le produit et le corps déformable ; et/ou
- pour lequel le corps déformable (111) est constitué au moins en partie d'un métal, notamment d'un acier inoxydable, de titane, de tantale ou d'un alliage à base de nickel ; et/ou
- pour lequel le corps déformable (111) est constitué au moins en partie d'une céramique ; et/ou
- pour lequel le corps déformable (111) est réalisé en forme de disque ; et/ou
- pour lequel le capteur radio (112) comprend au moins un transducteur interdigité, notamment relié électriquement à au moins une antenne.

3. Dispositif transducteur selon l'une des revendications précédentes, comprenant en outre : un actionneur (115) positionné notamment sur le corps déformable (111) et/ou relié à celui-ci par une liaison de matière, lequel actionneur est conçu pour déformer élastiquement le corps déformable, notamment de telle sorte que le corps déformable exécute au moins temporairement des vibrations mécaniques autour d'une position de repos statique et/ou de telle sorte que le corps déformable est dévié au moins temporairement d'une position de repos statique.

4. Dispositif transducteur selon l'une des revendications précédentes,
- pour lequel le corps déformable (111) présente une membrane (111a), notamment en forme de disque circulaire, ou lequel corps déformable est formé au moyen d'une membrane (111a), notamment en forme de disque circulaire, et
- pour lequel le capteur radio est positionné sur un côté de la membrane et est relié à celle-ci par une liaison de matière, notamment par collage.

5. Dispositif transducteur selon la revendication précédente, pour lequel le corps déformable (111) présente une languette de capteur (111b), notamment en forme de pale et/ou au moins en forme de coin par sections et/ou au moins en forme de tige par sections, ou lequel corps déformable est formé au moyen d'une languette de capteur (111b), notamment en forme de pale et/ou au moins en forme de coin par sections et/ou au moins en forme de tige par sections.

6. Dispositif transducteur selon la revendication précédente,
- pour lequel la languette de capteur est positionnée sur un côté de la membrane opposé au capteur radio ; et/ou
- pour lequel la languette de capteur est conçue pour convertir une force agissant sur elle en une déformation de la membrane provoquant le changement de forme de la surface du capteur radio (112) ; et/ou
- pour lequel la languette de capteur est conçue pour être insérée dans un canal intérieur d'un tube ou pour être contournée par un produit fluide s'écoulant dans un canal intérieur d'un tube.

7. Dispositif transducteur selon la revendication précédente, pour lequel la languette de capteur est conçue pour convertir une force agissant sur elle, provoquée par un produit fluide, notamment par des variations de pression à l'intérieur du produit, en une déformation de la membrane provoquant le changement de forme de la surface du capteur radio (112).

8. Dispositif transducteur selon l'une des revendications 1 à 3, pour lequel le corps déformable (111) est de forme tubulaire.

9. Dispositif transducteur selon l'une des revendications précédentes, pour lequel le corps déformable (111) comprend un tube, notamment courbé au moins par sections et/ou droit au moins par sections, ou est formé au moyen d'un tube, notamment courbé au moins par sections et/ou droit au moins par sections.

10. Dispositif transducteur selon l'une des revendications précédentes, pour lequel le corps déformable (111), notamment de forme tubulaire ou formé au moyen d'un tube, présente un canal intérieur enveloppé d'une paroi, notamment métallique, laquelle paroi est conçue pour guider un fluide, notamment un fluide s'écoulant au moins temporairement.

11. Dispositif transducteur selon la revendication précédente,
- pour lequel le capteur radio (112) est positionné sur un côté de la paroi opposé au canal intérieur ; et/ou
- pour lequel le capteur radio (112) est relié à la paroi.

12. Dispositif transducteur selon l'une des revendications précédentes, comprenant en outre : au moins un autre capteur radio (112').

13. Dispositif transducteur selon la revendication précédente, pour lequel chacun des au moins deux capteurs radio présente une largeur de bande prédéfinie et une fréquence centrale prédéfinie, notamment une fréquence centrale qui s'écarte de la fréquence centrale de l'autre capteur de plus d'une somme des largeurs de bande des deux capteurs radio.

14. Dispositif transducteur selon la revendication précédente,
- pour lequel les deux capteurs radio sont disposés sur le corps déformable de telle sorte que les directions de mesure respectives des deux capteurs radio (112, 112') diffèrent l'une de l'autre, notamment qu'elles soient orthogonales l'une à l'autre ; et/ou
-- pour lequel les deux capteurs radio sont disposés sur le corps déformable de telle sorte que chacun des capteurs radio (112, 112') est positionné dans une zone du corps déformable (111) qui diffère de l'autre zone en ce qui concerne l'ampleur d'un changement local de la forme et/ou une forme du même changement local de la forme et/ou qui diffère de l'autre zone en ce qui concerne sa réaction à une grandeur de mesure respective à détecter, notamment de telle sorte que le capteur radio (112) réagisse à une déformation du corps déformable (111) résultant aussi bien d'une force agissante que d'une variation de température et que l'autre capteur radio (112') réagisse uniquement à une déformation du corps déformable (111) résultant d'une variation de température.

15. Dispositif transducteur selon l'une des revendications précédentes, pour lequel le capteur radio (112) comporte au moins une antenne, notamment reliée électriquement à au moins un transducteur interdigité, lequel est destiné à convertir les ondes électromagnétiques en espace libre reçues par la même antenne en une tension électrique alternative véhiculée par câble et/ou à convertir une tension électrique alternative appliquée en ondes électromagnétiques en espace libre provenant du capteur radio (112).

16. Système de mesure, comprenant :
- un dispositif transducteur (Tr) selon l'une des revendications précédentes, lequel est positionné notamment dans une tubulure de raccordement d'un réservoir de process ;
- ainsi qu'une électronique de mesure (µC) couplée électriquement au dispositif transducteur (Tr), notamment à une antenne du dispositif transducteur ou à un guide d'ondes du dispositif transducteur,
-- laquelle électronique de mesure est conçue pour générer au moins un signal de commande électrique (s1) alimentant et/ou commandant le dispositif transducteur et pour injecter ledit signal dans le dispositif transducteur (Tr), notamment dans une antenne du dispositif transducteur ou dans un guide d'ondes du dispositif transducteur,
-- et laquelle électronique de mesure est conçue pour recevoir et évaluer un signal de mesure (e1) fourni par le dispositif transducteur, notamment par une antenne du dispositif transducteur ou par un guide d'ondes du dispositif transducteur, notamment pour déterminer, au moyen du signal de mesure, une valeur mesurée quantifiant une ampleur d'un changement de forme momentané du capteur radio et/ou une valeur mesurée quantifiant une fréquence d'un changement de forme périodique du capteur radio.

17. Système de mesure selon la revendication précédente,
- pour lequel l'électronique de mesure est conçue pour générer le signal de commande avec une tension cadencée, notamment conçue comme une suite d'impulsions de tension rectangulaires ou sinusoïdales formées en paquets d'impulsions à une cadence prédéfinie et/ou réglable et/ou au moins temporairement constante, et pour injecter ledit signal dans le dispositif transducteur ; et/ou
- pour lequel l'électronique de mesure est conçue pour déterminer, sur la base d'une information de temps de propagation contenue dans le signal de mesure, une valeur mesurée quantifiant une fréquence d'un changement de forme périodique du capteur radio ; et/ou
- pour lequel l'électronique de mesure est conçue pour déterminer, sur la base d'un spectre d'amplitude contenu dans le signal de mesure, une valeur mesurée quantifiant une ampleur d'un changement de forme momentané du capteur radio.

18. Système de mesure selon l'une des revendications 16 à 17,
- pour lequel le dispositif transducteur est positionné dans une tubulure de raccordement d'un réservoir de process, notamment une conduite ou une cuve, notamment de telle sorte que le corps déformable pénètre au moins partiellement dans un canal intérieur dudit réservoir de process ou que le corps déformable peut être mis en contact avec un produit guidé dans ledit réservoir de process ; et/ou
- pour lequel l'électronique de mesure est conçue pour détecter au moins une grandeur de mesure physique d'un produit fluide s'écoulant au moins temporairement, notamment pour détecter une température d'un produit fluide et/ou pour détecter une densité d'un produit fluide et/ou pour détecter une pression dans un produit fluide et/ou pour détecter une vitesse d'écoulement d'un produit fluide guidé dans une conduite et/ou pour détecter des variations de pression dans une allée de tourbillons selon Karman formée dans un produit fluide en écoulement,
-- afin de déterminer, sur la base d'une information de temps de propagation contenue dans le signal de mesure, une valeur mesurée quantifiant une fréquence d'un changement de forme périodique du capteur radio ; et/ou
-- afin de déterminer, sur la base d'un spectre d'amplitude contenu dans le signal de mesure, une valeur mesurée quantifiant une ampleur d'un changement de forme momentané du capteur radio.

19. Utilisation d'un dispositif transducteur selon l'une des revendications 1 à 15 ou d'un système de mesure selon l'une des revendications 16 à 18 destiné à la détection d'au moins une grandeur de mesure physique (x) d'un produit fluide, notamment s'écoulant au moins temporairement et/ou présentant au moins temporairement une température de produit supérieure à 400 °C, notamment destiné à la détection d'une température d'un produit fluide et/ou à la détection d'une densité d'un produit fluide et/ou à la détection d'une pression dans un produit fluide et/ou pour la détection d'une vitesse d'écoulement d'un produit fluide guidé dans une conduite et/ou pour la détection de variations de pression dans une allée de tourbillons selon Karman formée dans un produit fluide en écoulement, et à la génération de valeurs mesurées (X), notamment numériques, représentant la même grandeur de mesure (x).
